# EUROPÄISCHE PATENTSCHRIFT

(11) **EP 2 421 924 B1**
(45) Veröffentlichungstag und Bekanntmachung des Hinweises auf die Patenterteilung: **26.02.2014**
(21) Anmeldenummer: 10717051.6
(22) Anmeldetag: 21.04.2010
(51) Int. Cl.: C09D 133/08, C08K 5/00, C08K 5/29

(54) **WASSERFREIE HIGH-SOLID-BASISLACKE, IHRE HERSTELLUNG UND IHRE VERWENDUNG ZUR HERSTELLUNG VON MEHRSCHICHTLACKIERUNGEN, SOWIE MEHRSCHICHTLACKIERUNGEN ENTHALTEND EINE BASISLACKIERUNG AUS EINEM WASSERFREIEN HIGH-SOLID-BASISLACK**
WATER-FREE HIGH-SOLIDS BASE PAINTS, THE PRODUCTION THEREOF AND THE USE THEREOF FOR PRODUCING MULTILAYER PAINT COATINGS, AND MULTILAYER PAINT COATINGS COMPRISING A BASE COATING MADE OF A WATER-FREE HIGH-SOLIDS BASE PAINT
LAQUES DE BASE À TENEUR ÉLEVÉE EN MATIÈRES SOLIDES ET EXEMPTES D'EAU, LEUR FABRICATION ET LEUR UTILISATION POUR L'ENDUCTION DE LAQUES EN PLUSIEURS COUCHES AINSI QUE DES LAQUES EN PLUSIEURS COUCHES CONTENANT UNE LAQUE DE BASE À TENEUR ÉLEVÉE EN MATIÈRES SOLIDES ET EXEMPTE D'EAU

(30) Priorität: 21.04.2009 DE 102009018217
(43) Veröffentlichungstag der Anmeldung: 29.02.2012
(73) Patentinhaber: BASF Coatings GmbH, 48165 Münster (DE)
(72) Erfinder: LÖW, Norbert, 91413 Neustadt/Aisch (DE); DUCHNIK, Veronika, 97627 Himmelstadt (DE); LAVALAYE, Jorn, 97082 Würzburg (DE)
(74) Vertreter: Steffan, Gerhard
(86) Internationale Anmeldenummer: PCT/EP2010/002430
(87) Internationale Veröffentlichungsnummer: WO 2010/121791

(56) Entgegenhaltungen:
- EP-A1- 0 027 719
- EP-A1- 1 538 171
- EP-A2- 0 217 385

## Beschreibung

### Gebiet der Erfindung

Die vorliegende Erfindung betrifft wasserfreie High-Solid-Basislacke, ihre Herstellung und ihre Verwendung zur Herstellung von Mehrschichtlackierungen sowie Mehrschichtlackierungen :enthaltend eine Basislackierung aus einem wasserfreien High-Solid-Basislack.

### Stand der Technik

Die seit langem bekannten lösemittelhaltigen, wasserfreien Beschichtungsmittel, insbesondere die sogenannten Basislacke und Klarlacke, und die hiermit hergestellten ein- oder mehrschichtigen farb- und/oder effektgebenden Lackierungen weisen sehr gute anwendungstechnische Eigenschaften auf.

Die stetig wachsenden technischen und ästhetischen Ansprüche des Marktes, insbesondere die Ansprüche der Automobitherstetter und ihrer Kunden, erfordern aber eine stetige Weiterentwicklung des bisher erreichten technischen und ästhetischen Niveaus.

Insbesondere müssen neue Beschichtungsmittel zur Verfügung gestellt werden, die bereits in geringer Schichtdicke ein gutes Deckvermögen aufweisen und die gleichzeitig zur Herstellung von Mehrschichtlackierungen mit guten anwendungstechnischen Eigenschaften, insbesondere guter Haftfestigkeit und guter Steinschlagfestigkeit, geeignet sind. Dabei sollen auch die durch die bekannten Basis- und Klarlacke und die hieraus hergestellten Mehrschichtlackierungen erzielten Vorteile nicht verloren gehen, sondern zumindest in der gleichen, vorzugsweise einer stärkeren, Ausprägung erhalten bleiben.

Mehrschichtlackierungen, bestehend aus Basislack und Klarlack, sind in der Automobilindustrie weit verbreitet. Mehrschichtlackierungen können dadurch hergestellt werden, dass nach Vorlackierung eines Basislackes und kurzer Ablüftzeit ohne Einbrennschritt (Nass-in-Nass-Verfahren) ein Klarlack überlackiert wird und anschließend Basislack und Klarlack zusammen eingebrannt werden. Bei den neuartigen 3-Wet-Beschichtungs-Verfahren wird ein Basislack als Primer-Ersatz lackiert, nach kurzer Ablüftzeit wird ein weiterer Basislack und nach wiederholter kurzer Ablüftzeit ohne Einbrennschritt (Nass-in-Nass-in-Nass-Verfahren) ein Klarlack überlackiert. Anschließend werden alle drei Schichten (Basislack I + II und Klarlack) gemeinsam eingebrannt. Beispiele für 3-Wet-Verfahren sind in der WO 2006/062666 und in der Anmeldung EP 1940977 beschrieben.

Mehrschichtlackierungen werden wegen ihrer hervorragenden Eigenschaftsprofile, wie Kratz-, Chemikalien- und Wetterbeständigkeit, sowie hohem Glanz eingesetzt. Aus Gründen des Umweltschutzes müssen ferner Beschichtungsmittel mit einem immer niedrigeren Lösemittelgehalt und somit einem immer höheren Festkörpergehalt (sogenannte High Solids) zur Verfügung gestellt werden.

Festkörperreiche Klarlacke, die die Grenzen für flüchtige organische Bestandteile (VOC) einhalten und die vom Kunden geforderte hohe Kratzbeständigkeit besitzen, basieren überwiegend auf Carbamat-haltigen Bindemittelsystemen, die in Kombination mit monomeren Vernetzungsharzen wie Hexa(methoxymethyl)melamin (HMMM) oder gemischt-veretherten Melaminen und polymerisierten Bindemitteln ein dichtes Netzwerk bilden. Unter die flüchtigen organischen Bestandteile (VOC) fallen die Lösemittel sowie flüchtige Abspaltprodukte aus Filmbildreaktionen (vgl. Römpp Lexikon Lacke und Druckfarben, Georg Thieme Verlag Stuttgart/New York 1998, ISBN 3-13-776001-1, Seite 612, Stichwort "Volatile organic compounds" (VOC)).

Die Basislacke in den Mehrschichttackierungen enthatten üblicherweise ein Bindemittel und ein Vernetzungsmittel. Das Bindemittel besitzt häufig hydroxyfunktionelle Gruppen an einem polymeren Netzwerk. Als Vernetzungsmittel werden üblicherweise monomere Vernetzungsharze wie Hexa(methoxymethyl)melamin (HMMM) oder gemischt-veretherte Melamine eingesetzt.

WO 2008/058590 A1 beschreibt pigmentierte Beschichtungsmittel, enthaltend mindestens ein anorganisches Teilchen (N) mit einer Primärteilchengröße von 1 bis 800 nm, mindestens ein Bindemittel (B), mindestens ein färb- und/oder effektgebendes Pigment sowie ein oder mehrere organische Lösemittel, wobei die anorganischen Teilchen (N) zumindest teilweise mit einem Stabilisator (S) modifiziert sind, der Gruppen (S1), die mit der Oberfläche der anorganischen Teilchen (N) in Wechselwirkung treten können, und eine oder mehrere hydrophobe Teilstrukturen aufweist, dadurch gekennzeichnet, dass das Beschichtungsmittel zusätzlich mindestens ein Wachs oder eine wachsartige Verbindung (W) enthält. Das Dokument beschreibt weiterhin die Verwendung der pigmentierten Beschichtungsmittel zur Herstellung von Mehrschichtlackierungen sowie deren Verwendung sowie ein Verfahren zur Verbesserung des Flops von Mehrschichtlackierungen durch Verwendung der pigmentierten Beschichtungsmittel. Es können verschiedene Bindemittel (B) eingesetzt werden. Die so erhaltenen Lackierungen weisen ein besonders stark ausgeprägtes Hell-Dunkel-Verhalten (metallischer Flop) auf.

EP 0 217 385 offenbart eine Methode zum Aufbau von mehrschichtigen Metalllackbeschichtungen, wobei der zu verwendende Basislack ein metallisches Pigment enthält.

EP 1538171 A1 offenbart eine High-sotid-Beschichtungszusammensetzung zur Anwendung in der Fahrzeugreparaturlackierung.

EP 0027719 A1 offenbart eine thermisch härtbare Beschichtungszusammensetzung, die einen nicht-flüchtigen Anteil von über 60 % aufweisen kann und als Automobildecklack verwendet werden kann.

Heutzutage werden lösemittelhaltige, wasserfreie High-Solid-Basislacke mit einer Trockenfilm-Schichtdicke von ca. 16-20 µm lackiert, während bei der Lackierung von Wasserbasislacken nur eine Schichtdicke von 10-12 µm üblich ist. Eine Reduktion der Basislackschichtdicke auf 10-12 µm kann bei lösemittelhaltigen Basislacken zu einer Verminderung der VOC-Emissionen von 5 g pro Quadratmeter lackierter Fläche führen.

Allerdings führt die Reduktion der Trockenfilmschichtdicke von derartigen Basislackierungen häufig zu einer Verschlechterung der Prozessstabilität, der Farbtonstabilität, der Untergrundabdeckung und der weiteren Eigenschaften der Basislackierung. Insbesondere nehmen das Deckvermögen der Lackschicht, die Haftfestigkeit sowie die Steinschlagfestigkeit bei Reduzierung der Schichtdicke ab.

Um das Deckvermögen zu verbessern, kann der Pigmentgehalt des Lacks erhöht werden. Ein Maß dafür ist das sogenannte Pigment-Bindemittel-Verhältnis (p/b). Je höher das p/b, desto höher ist der Pigmentgehalt in der Basislackformulierung. Die Erhöhung des Pigmentgehalts führt jedoch häufig zu einer weiteren Verschlechterung der Haftfestigkeit und der Steinschlagfestigkeit der Lackierung.

Daher müssen festkörperreiche, wasserfreie Basislacke entwickelt werden, die auch in geringen Schichtdicken ein gutes Deckvermögen bei gleichzeitig guter

Haftfestigkeit und Steinschlagfestigkeit der Lackierung aufweisen und dabei keine weiteren Verarbeitungs-, Applikations- oder technologischen Probleme zeigen und für die Automobilserienlackierung (OEM) sowie die Automobil-Reparaturlackierung geeignet sind.

### Aufgabe

Der vorliegenden Erfindung lag daher die Aufgabe zugrunde, festkörperreiche wasserfreie Basislacke zur Verfügung zu stellen, aus denen Lackierungen erhalten werden können, die bereits bei geringer Schichtdicke ein gutes Deckvermögen mit gleichzeitig hoher Haftfestigkeit und hoher Steinschlagfestigkeit aufweisen.

Besonders kommt es darauf an, ein ausgewogenes Verhältnis zwischen Haftfestigkeit und Steinschlagfestigkeit auf der einen Seite und gutem Deckvermögen bei geringer Schichtdicke auf der anderen Seite zu erzielen.

Insbesondere soll dies auch bei wasserfreien Basislacken mit einem höheren Festkörpergehalt und Pigment-Bindemittel-Verhältnis bei Spritzviskosität gewährleistet werden.

Darüber hinaus sollten die durch die bekannten High-Solid-Basis- und Klarlacke und die hieraus hergestellten Basis- bzw. Klarlackierungen und Mehrschichtlackierungen erzielten Vorteile wie guter Verlauf, geringe Stippenbildung und hohe Farbkonstanz nicht verloren gehen, sondern zumindest in der gleichen, vorzugsweise einer stärkeren Ausprägung erhalten bleiben.

Die resultierenden Lackierungen sollten insbesondere keinen oder einen möglichst geringen Glanzschleier (Haze) und einen sehr guten optischen Gesamteindruck (Appearance) aufweisen. Ferner sollten die Lackierungen frei von Lackstörungen wie Rissbildungen (Mudcracking), Hell-Dunkel-Schattierungen (Wolken) und Stippen sein. Darüber hinaus sollten die Lackierungen keine optischen Fehlstellen wie z.B. Schleifflecken zeigen.

Weiterhin sollte ein Verfahren zur Herstellung eines wasserfreien High-Solid-Basislacks zur Verfügung gestellt werden, der die obigen Anforderungen erfüllt.

Des weiteren sollte eine Mehrschichtlackierung sowie ein Verfahren zu ihrer Herstellung zur Verfügung gestellt werden, die die obigen Vorteile aufweist.

Darüber hinaus sollten Substrate aus Metall und/oder Kunststoff bereitgestellt werden, die mit der Mehrschichtlackierung beschichtet sind.

### Lösung der Aufgabe

Überraschenderweise wurde gefunden, dass die Aufgabe durch einen wasserfreien High-Solid-Basislack mit einem Festkörpergehalt von mindestens 35 Gew.-%, enthaltend
a. 1 bis 10 Gew.-% mindestens eines Polyester-Bindemittels, welches eine Säurezahl von mindestens 20 mg KOH/g aufweist,
b. 10 bis 30 Gew.-% mindestens eines Acrylat-Bindemittels,
c. 9,5 bis 30 Gew.-% mindestens eines Vernetzungsmittels, das ausgewählt ist aus der Gruppe bestehend aus freien Isocyanaten, blockierten Isocyanaten und Aminoplastharzen,
d. 1 bis 3 Gew.-% mindestens eines Sulfonsäure-Katalysators,
e. 1 bis 35 Gew.-% mindestens eines Pigments,
f. 30 bis 65 Gew.-% mindestens eines organischen Lösemittels und
g. 0,5 bis 47 Gew.-% mindestens eines Hilfs- oder Zusatzstoffs, jeweils bezogen auf das Gesamtgewicht des Basislacks,
gelöst werden kann.

Ein weiterer Gegenstand der vorliegenden Erfindung ist ein Verfahren zur Herstellung dieses Basislacks. Dieser Basislack kann durch Vermischen und Homogenisieren der Bestandteile hergestellt werden.

Die erfindungsgemäßen Basislacke weisen eine gute Lagerstabilität auf, d.h. dass auch bei Lagerung der Beschichtungsmittel bei 3 Tagen 60 °C keine signifikante Verschlechterung der Eigenschaften, sowohl der Beschichtungsmittel, als auch der aus diesen gelagerten Beschichtungsmittel hergestellten Beschichtungen, insbesondere keine Verschlechterung der rheologischen Eigenschaften der Basislacke auftrat.

Ein weiterer Gegenstand der vorliegenden Erfindung ist die Verwendung dieses Basislacks zur Herstellung einer Mehrschichtlackierung sowie ein entsprechendes Verfahren zur Herstellung einer Mehrschichtlackierung. Hierzu werden zunächst der Basislack und anschließend mindestens ein Klarlack auf ein gegebenenfalls vorbeschichtetes Substrat appliziert.

Ein weiterer Gegenstand der Erfindung sind die mit diesem Verfahren erhältlichen Mehrschichtlackierungen, die mindestens eine Basislackierung aus dem erfindungsgemäßen Basislack und mindestens eine Klarlackierung enthalten.

Besonders überraschend war es, dass diese erfindungsgemäßen Mehrschichtlackierungen auch bei geringer Schichtdicke der Basislackierung ein gutes Deckvermögen und insbesondere gleichzeitig auch eine gute Haftfestigkeit und eine gute Steinschlagfestigkeit aufweisen.

Die erfindungsgemäßen Mehrschichtlackierungen weisen zudem einen guten Haze, d.h. keinen Glanzschleier, einen guten Verlauf sowie einen sehr guten optischen Gesamteindruck (Appearance) auf. Ferner sind die Lackierungen frei von Lackstörungen, wie Rissbildungen (Mudcracking), Hell-Dunkel-Schattierungen (Wolken) und Stippen, und zeigen keine Schleifflecken.

Schließlich erfüllen die erfindungsgemäßen Mehrschichtlackierungen die üblicherweise an eine Automobillackierung gestellten Anforderungen.

Ein weiterer Gegenstand der Erfindung sind Metall- und/oder Kunststoff-Substrate, die mit mindestens einem erfindungsgemäßen Basislack beschichtet sind.

### Ausführliche Beschreibung der Erfindung

Besondere Ausführungsformen der Erfindung werden durch die abhängigen Patentansprüche beschrieben.

### Wasserfreie High-Solid-Basislacke

Der erfindungsgemäße wasserfreie High-Solid-Basislack weist einen Festkörpergehalt von mindestens 35 Gew.-% auf. Der Festkörpergehalt der Basis-und Klarlacke wird nach DIN ISO 3251 mit einer Einwaage von 1,0 g bei einer Prüfdauer von 60 min bei einer Temperatur von 125 °C durchgeführt. Vorzugsweise beträgt der Festkörpergehalt des Basislacks mindestens 40 Gew.-%.

Der erfindungsgemäße wasserfreie High-Solid-Basislack enthält mindestens
- ein Polyester-Bindemittel (PE)
- ein Acrylat-Bindemittel (AC)
- ein Vernetzungsmittel (V)
- einen Katalysator (K)
- ein Pigment (P)
- ein organisches Lösemittel (L)
- einen Hilfs- oder Zusatzstoff (Z).

Die einzelnen Bestandteile werden im folgenden beschrieben.

### Bindemittel

Der erfindungsgemäße Basislack kann physikalisch härtend sein. Im Rahmen der vorliegenden Erfindung bedeutet der Begriff "physikalische Härtung" die Härtung einer Schicht aus einem Beschichtungsmittel durch Verfilmung durch Lösemittelabgabe aus dem Beschichtungsmittel, wobei die Verknüpfung innerhalb der Beschichtung über Schlaufenbildung der Polymermoleküle der Bindemittel (zu dem Begriff vgl. Römpp Lexikon Lacke und Druckfarben, Seiten 73 und 74, Stichwort "Bindemittel") erfolgt. Oder aber die Verfilmung erfolgt über die Koaleszenz von Bindemittelteilchen (vgl. Römpp Lexikon Lacke und Druckfarben, Seiten 274 und 275, Stichwort "Härtung"). Üblicherweise sind hierfür keine Vernetzungsmittel notwendig. Gegebenenfalls kann die physikalische Härtung durch Luftsauerstoff, Hitze oder durch Bestrahlen mit aktinischer Strahlung unterstützt werden.

Der erfindungsgemäße Basislack kann thermisch härtbar sein. Hierbei kann das Bindemittel selbstvernetzend oder fremdvernetzend sein. Im Rahmen der vorliegenden Erfindung bezeichnet der Begriff "selbstvernetzend" die Eigenschaft eines Bindemittels, mit sich selbst Vernetzungsreaktionen einzugehen. Voraussetzung hierfür ist, dass in den Bindemitteln bereits beide Arten von komplementären reaktiven funktionellen Gruppen enthalten sind, die für eine Vernetzung notwendig sind, oder aber das Bindemittel enthält reaktive funktionelle Gruppen, die "mit sich selbst" reagieren können. Als fremdvernetzend werden dagegen solche Beschichtungsmittel bezeichnet, worin die eine Art der komplementären reaktiven funktionellen Gruppen in dem Bindemittel, und die andere Art in einem Vernetzungsmittel vorliegen. Ergänzend wird hierzu auf Römpp Lexikon Lacke und Druckfarben, Georg Thieme Verlag, Stuttgart, New York, 1998, "Härtung", Seiten 274 bis 276, insbesondere Seite 275, unten, verwiesen.

### Polyester-Bindemittel (PE)

Unter Polyester-Bindemitteln (PE) werden Polyesterharze verstanden.

Der erfindungsgemäße Basislack enthält 1 bis 10 Gew.-%, bezogen auf das Gesamtgewicht des Basislacks, mindestens eines Polyester-Bindemittels (PE), das eine Säurezahl von mindestens 20 mg KOH/g aufweist. Die Säurezahl wird nach DIN 53402 bestimmt und bezieht sich auf den Festkörper des Polyesterharzes.

Vorzugsweise enthält der erfindungsgemäße Basislack 2 bis 8 Gew.-%, besonders bevorzugt 3 bis 6 Gew.-%, jeweils bezogen auf das Gesamtgewicht des Basislacks, mindestens eines Polyester-Bindemittels (PE), das eine Säurezahl von mindestens 20 mg KOH/g aufweist.

Geeignete Polyesterharze (PE) können gesättigt oder ungesättigt, insbesondere gesättigt sein. Unter ungesättigten Polyesterharzen werden solche verstanden, die mindestens eine polymerisierbare Kohlenstoff-Kohlenstoff-Doppelbindung enthalten. Unter gesättigten Polyesterharzen werden solche verstanden, die keine polymerisierbare Kohlenstoff-Kohlenstoff-Doppelbindung enthalten.

Vorzugsweise weisen die Polyester-Bindemittel (PE) ein gewichtsmittleres Molekulargewicht von 400 bis 6000 g/mol auf. Die Bestimmung des Molekulargewichts erfolgt mittels GPC-Analyse mit THF (+0,1% Essigsäure) als Eluent (1 ml/min) auf einer Styrol-Divinylbenzol-Säulenkombination. Die Kalibrierung wird mit Polystyrol-Standards durchgeführt.

Polyesterharze (PE) können durch Veresterung von organischen Dicarbonsäuren oder ihren Anhydriden mit organischen Diolen hergestellt werden oder leiten sich von einer Hydroxycarbonsäure oder einem Lacton ab. Bevorzugt werden die Polyesterharze (PE) durch Veresterung von organischen Dicarbonsäuren oder ihren Anhydriden mit organischen Diolen hergestellt. Die bevorzugten Polyesterharze (PE) enthalten daher Struktureinheiten, die auf aliphatische, cycloaliphatische und/oder aromatische Di- bzw. Polycarbonsäuren und auf Di- bzw. Polyole zurückgehen. Um verzweigte Polyesterharze herzustellen, können in geringem Umfang auch Polyole oder Polycarbonsäuren mit einer höheren Wertigkeit als 2 eingesetzt werden. Die Di- bzw. Polycarbonsäuren und Di- bzw. Polyole können lineare oder verzweigte aliphatische, cycloaliphatische oder aromatische Di- bzw. Polycarbonsäuren oder Di- bzw. Polyole sein.

Zur Herstellung der Polyesterharze geeignete Diole sind beispielsweise Alkylenglykole, wie Ethylenglykol, Propylenglykol, Butylenglykol, Butandiol-1,4, Hexandiol-1,6, Neopentylglykol, und andere Diole, wie Dimethylolcyclohexan. Es können jedoch auch kleine Mengen an Polyolen, wie beispielsweise Trimethylolpropan, Glycerin, Pentaerythrit, zugesetzt werden. Die Säurekomponente des Polyesters besteht in erster Linie aus niedermolekularen Dicarbonsäuren oder ihren Anhydriden mit 2 bis 44, bevorzugt 4 bis 36 Kohlenstoffatomen im Molekül. Geeignete Säuren sind beispielsweise o-Phthalsäure, Isophthalsäure, Terephthalsäure, Tetrahydrophthalsäure, Cyclohexandicarbonsäure, Bernsteinsäure, Adipinsäure, Azelainsäure, Sebazinsäure, Maleinsäure, Fumarsäure, Glutarsäure, Hexachlorheptandicarbonsäure, Tetrachlorphthalsäure und/oder dimerisierte Fettsäuren. Anstelle dieser Säuren können auch ihre Anhydride, soweit diese existieren, verwendet werden. Bei der Bildung von Polyesterpolyolen können auch kleinere Mengen an Carbonsäuren mit 3 oder mehr Carboxylgruppen, beispielsweise Trimellithsäureanhydrid oder das Addukt von Maleinsäureanhydrid an ungesättigte Fettsäuren, verwendet werden.

Es können auch Polyesterdiole eingesetzt werden, die durch Umsetzung eines Lactons mit einem Diol erhalten werden. Sie zeichnen sich durch die Gegenwart von endständigen Hydroxylgruppen und wiederkehrenden Polyesteranteilen der Formel (-CO-(CHR²)ₙ-CH₂-O) aus. Hierbei ist n bevorzugt 4 bis 12 und der Substituent R² = jeweils unabhängig voneinander Wasserstoff, ein Alkyl-, Cycloalkyl- oder AlkoxyRest. Bevorzugt enthält keiner der Substituenten R² mehr als 12 Kohlenstoffatome. Beispiele sind Hydroxycapronsäure, Hydroxybuttersäure, Hydroxydecansäure und/oder 12-Hydroxystearinsäure.

Für die Herstellung der Polyesterdiole wird das unsubstituierte ε-Caprolacton, bei dem n den Wert 4 hat und alle R²-Substituenten Wasserstoff sind, bevorzugt. Die Umsetzung mit Lacton wird durch niedermolekulare Polyole wie Ethylenglykol, 1,3-Propandiol, 1,4-Butandiol, Dimethylolcyclohexan gestartet. Es können jedoch auch andere Reaktionskomponenten, wie Ethylendiamin, Alkyldialkanolamine oder auch Harnstoff mit Caprolacton umgesetzt werden. Als höhermolekulare Diole eignen sich auch Polylactamdiole, die durch Reaktion von beispielsweise ε-Caprolactam mit niedermolekularen Diolen hergestellt werden.

### Acrylat-Bindemittel (AC)

Der erfindungsgemäße wasserfreie High-Solid-Basislack enthält 10 bis 30 Gew.-%, bezogen auf das Gesamtgewicht des Basislacks, mindestens eines Acrylat-Bindemittels (AC).

Vorzugsweise enthält der erfindungsgemäße Basislack 11 bis 25 Gew.-%, besonders bevorzugt 12 bis 20 Gew.-%, mindestens eines Acrylat-Bindemittels (AC), jeweils bezogen auf das Gesamtgewicht des Basislacks.

Als Acrylat-Bindemittel (AC) geeignet sind beispielsweise statistisch, alternierend und/oder blockartig aufgebaute lineare und/oder verzweigte und/oder kammartig aufgebaute (Co)Polymerisate von Acrylsäure und/oder Methacrylsäure sowie gegebenenfalls zusätzlichen ethylenisch ungesättigten Monomeren sowie aus diesen (Co)Polymerisaten durch polymeranaloge Reaktionen erhaltene Verbindungen. Unter Acrylat-Bindemitteln (AC) werden daher (Meth)Acrylat(co)polymerisate und aus (Meth)Acrylat(co)polymerisaten durch polymeranaloge Reaktionen erhaltene Derivate verstanden. Die Schreibweise (Meth)Acrylat umfasst sowohl Acrylate, Methacrylate als auch Mischungen hiervon. Die Schreibweise (Co)polymerisat umfasst Homopolymerisate und Copolymerisate. Der Begriff (Meth)Acrylat-(co)polymerisate umfasst daher Homo- und Copolymerisate von Acrylsäure und Acrylsäure-Derivaten, Methacrylsäure und Methacrylsäure-Derivaten sowie gegebenenfalls zusätzlicher, von (Meth)Acrylsäure und -derivaten verschiedenen ethylenisch ungesättigten Comonomeren.

Polymeranaloge Reaktionen sind Reaktionen an Makromolekülen, die unter Erhalt des Polymercharakters der Substrate durchgeführt werden. Sie bewirken also die Umwandlung eines Polymeren in ein anderes. Polymeranaloge Reaktionen werden im allgemeinen über funktionelle Gruppen der Makromoleküle durchgeführt. Zu dem Begriff "polymeranaloge Reaktion" wird ergänzend auf Römpp Chemie Lexikon, 9. Auflage 1995, Band PL - S, Seite 3542-3543, Stichwort "Polymeranaloge Reaktionen" verwiesen.

Als Acrylat-Bindemittel (AC) geeignet sind die in Basisiacken im Bereich der Automobilindustrie üblicherweise eingesetzten Acrylat-Bindemittel, wobei in dem Fachmann bekannter Weise über die Auswahl der Art und Menge der zur Herstellung dieser Bindemittel eingesetzten Aufbaukomponenten die Eigenschaften und damit die Eignung der Bindemittel für den erfindungsgemäßen Basislack gesteuert wird.

Es werden vorzugsweise Acrylat-Bindemittel (AC) mit Thio-, Hydroxyl-, N-Me-thylolamino-, N-Alkoxymethylamino-, Imino-, Carbamat-, Allophanat- und/oder Carboxylgruppen, bevorzugt Hydroxyl- oder Carboxylgruppen, einerseits und vorzugsweise Vernetzungsmittel mit Anhydrid-, Carboxyl-, Epoxy-, blockierten Isocyanat-, Urethan-, Methylol-, Methylolether, Siloxan-, Carbonat-, Amino-, Hydroxy-und/oder beta-Hydroxyalkylamidgruppen, bevorzugt Epoxy-, beta-Hydroxyalkylamid-, blockierte und unblockierte Isocyanat-, Urethan- oder Alkoxymethylaminogruppen, andererseits eingesetzt.

Im Falle selbstvernetzender Acrylat-Bindemittel (AC) enthalten die Bindemittel insbesondere Methylol-, Methylolether- und/oder N-Alkoxymethylaminogruppen.

Komplementäre reaktive funktionelle Gruppen, die für die Verwendung in den erfindungsgemäßen Beschichtungsstoffen besonders gut geeignet sind, sind Hydroxylgruppen einerseits und blockierte und unblockierte Isocyanat-, Urethan-oder Alkoxymethylaminogruppen andererseits.

Die Funktionalität der Acrylat-Bindemittel (AC) bezüglich der vorstehend beschriebenen reaktiven funktionellen Gruppen kann sehr breit variieren und richtet sich insbesondere nach der Vernetzungsdichte, die man erzielen will, und/oder nach der Funktionalität der jeweils angewandten Vernetzungsmittel (V). Beispielsweise liegt im Falle hydroxylgruppenhaltiger Acrylat-Bindemittel (AC) die OH-Zahl vorzugsweise bei 15 bis 300; bevorzugt 20 bis 250, besonders bevorzugt 25 bis 200, ganz besonders bevorzugt 30 bis 150 und insbesondere 35 bis 120 mg KOH/g nach DIN 53240.

Die vorstehend beschriebenen komplementären funktionellen Gruppen können nach den üblichen und bekannten Methoden der Polymerchemie in die Acrylat-Bindemittel (AC) eingebaut werden. Dies kann beispielsweise durch den Einbau von Monomeren, die entsprechende reaktive funktionelle Gruppen tragen, und/oder mit Hilfe polymeranaloger Reaktionen geschehen.

Geeignete Acrylat-Bindemittel (AC) weisen im Allgemeinen ein gewichtsmittleres Molekulargewicht von 400 bis 5000 g/mol auf. Die Bestimmung des Molekulargewichts erfolgt mittels GPC-Analyse mit THF (+0,1 % Essigsäure) als Eluent (1 ml/min) auf einer Styrol-Divinylbenzol-Säulenkombination. Die Kalibrierung wird mit Polystyrol-Standards durchgeführt.

Geeignete Acrylat-Bindemittel (AC) können nach den dem Fachmann bekannten Methoden unter Verwendung entsprechender olefinisch ungesättigter Monomere mit reaktiven funktionellen Gruppen, ggf. im Kombination mit Monomeren ohne reaktive funktionelle Gruppen, hergestellt werden.

Beispiele geeigneter olefinisch ungesättigter Monomere mit reaktiven funktionellen Gruppen sind:
a) Monomere, welche mindestens eine Hydroxyl-, Amino-, Alkoxymethylamino-, Carbamat-, Allophanat- oder Iminogruppe pro Molekül tragen, wie
   - Hydroxyalkylester der Acrylsäure, Methacrylsäure oder einer anderen alpha,beta-olefinisch ungesättigten Carbonsäure, die sich von einem Alkylenglykol ableiten, das mit der Säure verestert ist, oder die durch Umsetzung der alpha,beta-olefinisch ungesättigten Carbonsäure mit einem Alkylenoxid wie Ethylenoxid oder Propylenoxid erhältlich sind, insbesondere Hydroxyalkylester der Acrylsäure, Methacrylsäure, Ethacrylsäure, Crotonsäure, Maleinsäure, Fumarsäure oder Itaconsäure, in denen die Hydroxyalkylgruppe bis zu 20 Kohlenstoffatome enthält, wie 2-Hydroxyethyl-, 2-Hydroxypropyl-, 3-Hydroxypropyl-, 3-Hydroxybutyl-, 4-Hydroxybutylacrylat, -methacrylat, -ethacrylat, -crotonat, -maleinat, - fumarat oder -itaconat; oder Hydroxycyclo-alkylester wie 1,4-Bis(hydroxymethyl)cyclohexan-, Octahydro-4,7-methano-1H-inden-dimethanol- oder Methylpropandiolmonoacrylat, -monomethacrylat, - monoethacrylat, -monocrotonat, -monomaleinat, -monofumarat oder - monoitaconat; Umsetzungsprodukte aus cyclischen Estern, wie z.B. ε-Caprolacton und diesen Hydroxyalkyl- oder -cycloalkylestern;
   - olefinisch ungesättigte Alkohole wie Allylalkohol;
   - Polyole wie Trimethylolpropan mono- oder diallylether oder Pentaerythritmono-, -di- oder -triallylether;
   - Umsetzungsprodukte aus Acrylsäure und/oder Methacrylsäure mit dem Glycidylester einer in alpha-Stellung verzweigten Monocarbonsäure mit 5 bis 18 C-Atomen je Molekül, insbesondere einer Versatic®-Säure, oder anstelle des Umsetzungsproduktes eine äquivalenten Menge Acryl-und/oder Methacrylsäure, die dann während oder nach der Polymerisationsreaktion mit dem Glycidylester einer in alpha-Stellung verzweigten Monocarbonsäure mit 5 bis 18 C-Atomen je Molekül, insbesondere einer Versatic®-Säure, umgesetzt wird;
   - Aminoethylacrylat, Aminoethylmethacrylat, Allylamin oder N-Methyliminoethylacrylat;
   - N,N-Di(methoxymethyl)aminoethylacrylat oder -methacrylat oder N,N-Di(butoxymethyl)aminopropylacrylat oder -methacrylat;
   - (Meth)Acrylsäureamide, wie (Meth)Acrylsäureamid, N-Methyl-, NMethylol-, N,N-Dimethylol-, N-Methoxymethyl-, N,N-Di(methoxymethyl)-, N-Ethoxymethyl- und/oder N,N-Di(ethoxyethyl)-(meth)-acrylsäureamid;
   - Acryloyloxy- oder Methacryloyloxyethyl-, propyl- oder butylcarbamat oder - allophanat; weitere Beispiele geeigneter Monomere, welche Carbamatgruppen enthalten, werden in den Patentveröffentlichungen U.S. Pat. No. 3.479.328, U.S. Pat. No. 3.674.838, U.S. Pat. No. 4.126.747, U.S. Pat. No. 4.279.833 oder U.S. Pat. No. 4.340.497 beschrieben.
b) Monomere, welche mindestens eine Säuregruppe pro Molekül tragen, wie
   - Acrylsäure, beta-Carboxyethylacrylat, Methacrylsäure, Ethacrylsäure, Crotonsäure, Maleinsäure, Fumarsäure oder Itaconsäure;
   - olefinisch ungesättigte Sulfon- oder Phosphonsäuren oder deren Teilester;
   - Maleinsäuremono(meth)acryloyloxyethylester, Bernsteinsäuremono(meth)acryloyloxyethylester oder Phthalsäuremono(meth)acryloyloxyethylester; oder
   - Vinylbenzoesäure (alle Isomere), alpha-Methylvinylbenzoesäure (alle Isomere) oder Vinylbenzsolsulfonsäure (alle Isomere).
c) Epoxidgruppen enthaltende Monomere, wie der Glycidylester der Acrylsäure, Methacrylsäure, Ethacrylsäure, Crotonsäure, Maleinsäure, Fumarsäure oder Itaconsäure oder Allylglycidylether.

Höherfunktionelle Monomere der vorstehend beschriebenen Art werden im Allgemeinen in untergeordneten Mengen eingesetzt. Im Rahmen der vorliegenden Erfindung sind unter untergeordneten Mengen an höherfunktionellen Monomeren solche Mengen zu verstehen, welche nicht zur Vernetzung oder Gelierung der (Meth)Acrylat(co)polymerisate führen.

Beispiele geeigneter olefinisch ungesättigter Monomere ohne reaktive funktionelle Gruppen sind u.a. Alkylester der Acrylsäure, Methacrylsäure oder einer anderen alpha,beta-olefinisch ungesättigten Carbonsäure, vinylaromatische Verbindungen sowie Mischungen dieser Monomeren.

### Vernetzungsmittel (V)

Der erfindungsgemäße Basislack enthält 9,5 bis 30 Gew.-%, bezogen auf das Gesamtgewicht des Basislacks, mindestens eines Vernetzungsmittels (V), das ausgewählt ist aus der Gruppe bestehend aus freien Isocyanaten, blockierten Isocyanaten und Aminoplastharzen.

Vorzugsweise enthält der erfindungsgemäße Basislack 10 bis 25 Gew.-%, besonders bevorzugt 10,5 bis 20 Gew.-%, jeweils bezogen auf das Gesamtgewicht des Basislacks, mindestens eines Vernetzungsmittels (V), das ausgewählt ist aus der Gruppe bestehend aus freien Isocyanaten, blockierten Isocyanaten und Aminoplastharzen.

Als freie und/oder blockierte Isocyanate kommen die im Bereich der Lackindustrie üblicherweise eingesetzten freien und blockierten Isocyanate in Betracht, wie beispielsweise Hexamethylendiisocyanat (HDI), Isophorondüsocyanat (IPDI), Toluylendiisocyanat (TDI); deren Di- und Trimere sowie Derivate und blockierte Varianten.

Blockierte Isocyanate können aus Isocyanaten durch Reaktion mit einem Blockierungsmittel erhalten werden. Als Blockierungsmittel für Isocyanate kommen alle üblicherweise eingesetzten Blockierungsmittel, wie die entsprechenden Alkohole, Amine, Ketone, Pyrazole u.a. in Frage, bevorzugt Blockierungsmittel mit einer Deblockierungstemperatur unterhalb von 130°C; insbesondere Dimethylpyrazol.

Als Aminoplastharze sind prinzipiell die im Bereich der Lackindustrie üblicherweise eingesetzten Aminoplastharze geeignet, wobei über die Reaktivität der Aminoplastharze einige Eigenschaften des Basislacks gesteuert werden können. Es können monomere Vernetzungsharze wie Hexa(methoxymethyl)melamin (HMMM) oder gemischt-veretherte Melamine, oder auch polymere Vernetzungsharze eingesetzt werden. Bevorzugt werden mit Methanol und/oder Butanol veretherte Aminoplastharze, beispielsweise die im Handel unter den Bezeichnungen Cymel®, Resimene®, Maprenal® und Luwipal® erhältlichen Produkte, insbesondere Resimene® 747 und Resimene® 755, eingesetzt.

### Katalysator (K)

Der erfindungsgemäße Basislack enthält 1 bis 3 Gew.-%, bezogen auf das Gesamtgewicht des Basislacks, mindestens eines Sulfonsäure-Katalysators.

Vorzugsweise enthält der erfindungsgemäße Basislack 1,2 bis 2,8 Gew.-%, besonders bevorzugt 1,4 bis 2,6 Gew.-%, jeweils bezogen auf das Gesamtgewicht des Basislacks, mindestens eines Sulfonsäure-Katalysators.

Geeignete Sulfonsäure-Katalysatoren sind beispielsweise Dodecylbenzolsulfonsäure (DDBSA), Dinonylnaphthalendisulfonsäure (DNNSA), para-Toluolsulfonsäure, (p-TSA) sowie blockierte Sulfonsäure-Katalysatoren wie blockierte DDBSA, blockierte DNNSA oder blockierte p-TSA.

Vorzugsweise enthält der erfindungsgemäße Basislack einen blockierten Sulfonsäure-Katalysator.

Als blockierte Sulfonsäure-Katalysatoren werden bevorzugt Amin- oder kovalentblockierte Sulfonsäure-Katalysatoren verwendet, um die Stabilität und die Haltbarkeit der Lacksysteme zu gewährleisten. Zur Blockierung der Sulfonsäure-Katalysatoren werden daher als Amine bevorzugt tertiär alkylierte oder heterocyclische Amine verwendet, wie beispielsweise 2-Amino-2-methylpropanol, Diisopropanolamin, Dimethyloxazolidin oder Trimethylamin. Als kovalent bindende Blockierungsmittel werden beispielsweise Epoxy- oder Epoxy-Isocyanat-Verbindungen eingesetzt. Solche blockierten Sulfonsäure-Katalysatoren werden detailliert in der Patentveröffentlichung U.S. Pat. No. 5.102.961 beschrieben.

Die Wahl des Sulfonsäure-Katalysators (K) kann auch vom eingesetzten Vernetzer (V) abhängig gemacht werden. Die erfindungsgemäßen Basislacke können als Vernetzer (V) beispielsweise monomere Vernetzungsharze wie Hexa(methoxymethyl)melamin (HMMM) oder gemischt-veretherte Melamine, oder auch polymere Vernetzungsharze enthalten. Die eingesetzten Vernetzer (V) können unterschiedliche funktionelle Gruppen enthalten. Die Vernetzungsreaktion mit Hydroxy- oder Carbamat-funktionellen Gruppen erfolgt am besten mit starken Säure-Katalysatoren wie Dodecylbenzylsuifonsäure (DDBSA), Dinonylnaphthalendisulfonsäure (DNNSA) oder para-Toluolsulfonsäure (p-TSA). Reaktivere polymere Vernetzungsharze mit einem hohen Gehalt an NH-Gruppen reagieren besser mit blockierten Katalysatoren.

### Pigmente (P)

Der erfindungsgemäße Basislack enthält 1 bis 35 Gew.-%, bezogen auf das Gesamtgewicht des Basislacks, mindestens eines Pigments (P).

Pigmente sind pulver- oder plättchenförmige Farbmittel, die im Gegensatz zu Farbstoffen im umgebenden Medium unlöslich sind (vgl. Römpp Lacke und Druckfarben, Seite 451, Stichwort "Pigmente")

Vorzugsweise wird das Pigment aus der Gruppe, bestehend aus organischen und anorganischen, farbgebenden, effektgebenden, farb- und effektgebenden, magnetisch abschirmenden, elektrisch leitfähigen, korrosionshemmenden, fluoreszierenden und phosphoreszierenden Pigmenten, ausgewählt. Vorzugsweise werden die farb- und/oder effektgebenden Pigmente verwendet.

Besonders bevorzugt enthält der Basislack mindestens ein effektgebendes Pigment, insbesondere mindestens ein Metallplättchenpigment. Zusammen mit dem oder den effektgebenden Pigmenten enthält der Basislack ggf. noch mindestens ein oder mehrere farbgebende Pigmente.

Beispiele geeigneter Effektpigmente, die auch farbgebend sein können, sind Metallplättchenpigmente, wie handelsübliche Aluminiumbronzen und handelsübliche Edelstahlbronzen, sowie nichtmetallische Effektpigmente, wie zum Beispiel Perlglanz- bzw. Interferenzpigmente, plättchenförmige Effektpigmente auf der Basis von Eisenoxid oder flüssigkristalline Effektpigmente. Ergänzend wird auf Römpp Lexikon Lacke und Druckfarben, Seite 176, Stichwort "Effektpigmente" und Seiten 380 und 381, Stichworte "Metalloxid-Glimmer-Pigmente" bis "Metallpigmente" verwiesen.

Insbesondere werden handelsübliche Aluminiumbronzen eingesetzt. Eingesetzt werden dabei sowohl unbehandelte Typen, die beispielsweise unter dem Namen Stapa® Metallux der Firma Eckart im Handel erhältlich sind, als auch behandelte Typen, dinsbesondere silanisierte Typen, die beispielsweise in der WO 01/81483 beschrieben sind und beispielsweise unter dem Namen Hydrolan® der Firma Eckart im Handel erhältlich sind.

Vorzugsweise weist das Metallplättchenpigment eine Dicke von 200 bis 2000 nm und insbesondere 500 bis 1500 nm auf.

Bevorzugt hat das Metallplättchenpigment eine mittlere Teilchengröße von 10 bis 50 und insbesondere von 13 bis 25 µm (ISO 13320-1 nach Cilas (Gerät 1064)).

Geeignete organische und/oder anorganische farbgebende Pigmente sind die in der Lackindustrie üblicherweise eingesetzten Pigmente.

Beispiele für geeignete anorganische farbgebende Pigmente sind Weißpigmente wie Titandioxid, Zink-Weiß, Zinksulfid oder Lithopone; Schwarzpigmente wie Russ, Eisen-Mangan-Schwarz oder Spinellschwarz; Buntpigmente wie Chromoxid, Chromoxidhydratgrün, Kobaltgrün oder Ultramaringrün, Kobaltblau, Ultramarinblau oder Manganblau, Ultramarinviolett oder Kobalt- und Manganviolett, Eisenoxidrot, Cadmiumsulfoselenid, Molybdatrot oder Ultramarinrot; Eisenoxidbraun, Mischbraun, Spinell- und Korundphasen oder Chromorange; oder Eisenoxidgelb, Nickeltitangelb, Chromtitangelb, Cadmiumsulfid, Cadmiumzinksulfid, Chromgelb oder Bismutvanadat.

Beispiele für geeignete organische farbgebende Pigmente sind Monoazopigmente, Bisazopigmente, Anthrachinonpigmente, Benzimidazolpigmente, Chinacridonpigmente, Chinophthalonpigmente, Diketopyrrolopyrrolpigmente, Dioxazinpigmente, Indanthronpigmente, Isoindolinpigmente, Isoindolinonpigmente, Azomethinpigmente, Thioindigopigmente, Metallkomplexpigmente, Perinonpigmente, Perylenpigmente, Phthalocyaninpigmente oder Anilinschwarz.

Ergänzend wird auf Römpp Lexikon Lacke und Druckfarben, Georg Thieme Verlag, 1998, Seiten 180 und 181, Stichworte "Eisenblau-Pigmente" bis "Eisenoxidschwarz"; Seiten 451 bis 453, Stichworte "Pigmente" bis "Pigmentvolumenkonzentration", Seite 563, Stichwort "Thioindigo-Pigmente", Seite 567, Stichwort "Titandioxid-Pigmente", Seiten 400 und 467, Stichwort "Natürlich vorkommende Pigmente", Seite 459, Stichwort "Polycyclische Pigmente", Seite 52, Stichworte "Azomethinpigmente", "Azopigmente", und Seite 379, Stichwort "Metallkomplex-Pigmente", verwiesen.

Der Gehalt an den Pigmenten kann sehr breit variieren und richtet sich in erster Linie nach der Tiefe der Farbe und/oder der Intensität des Effekts, die eingestellt werden sollen, sowie nach der Dispergierbarkeit der Pigmente in Basislacken. Vorzugsweise liegt der Pigmentgehalt im Falle von Uni-Basislacken, jeweils bezogen auf das Gesamtgewicht des Basislacks, bei 3 bis 35 Gew.-%. Unter Uni-Basislacken werden Basislacke verstanden, die keine Metallic- oder Effektpigmente enthalten. Vorzugsweise liegt der Pigmentgehalt im Falle von Metallic-Lacken, jeweils bezogen auf das Gesamtgewicht des Basislacks, bei 1 bis 35 Gew.-%, bevorzugt bei 1 bis 30 Gew.-%.

### Organische Lösemittel (L)

Der erfindungsgemäße Basislack enthält 30 bis 65 Gew.-%, bezogen auf das Gesamtgewicht des Basislacks, mindestens eines organischen Lösemittels (L). Vorzugsweise enthält der erfindungsgemäße Basislack 35 bis 63 Gew.-%, besonders bevorzugt 40 bis 60 Gew.-%, jeweils bezogen auf das Gesamtgewicht des Basislacks, mindestens eines organischen Lösemittels (L).

Als organische Lösemittel (L) geeignet sind alle üblicherweise in der Lackindustrie eingesetzten Lösemittel, beispielsweise Alkohole, Glykolether, Ester, Etherester und Ketone, aliphatische und/oder aromatische Kohlenwasserstoffe, wie beispielsweise Aceton, Methylisobutylketon, Methylethylketon, Butylacetat, 3-Butoxy-2-propanol, Ethylethoxypropionat, Butylglykol, Butylglykolacetat, Butanol, Dipropylenglykolmethylether, Glykolsäurebutylester, Xylol, Toluol, Shellsol T, Pine Oel 90/95, Solventnaphtha®, Shellsot® A, Solvesso, Benzin 135/180 und ähnliche.

Durch den Gehalt an organischem Lösemittel (L) kann die Viskosität des Basislacks beeinflußt werden. Der Gehalt an organischem Lösemittel (L) wird vorzugsweise so gewählt, dass der erfindungsgemäße Basislack bei 23°C eine Viskosität von 16 s bis 35 s, bevorzugt 18 bis 25 s, Auslaufzeit im Ford 3 Cup aufweist. In der vorliegenden Anmeldung wird eine solche Viskosität von 16 s bis 35 s, bevorzugt 18 bis 25 s, Auslaufzeit im Ford 3 Cup bei 23°C im Allgemeinen als "Spritzviskosität" bezeichnet.

Durch den Gehatt an organischem Lösemittel (L) wird auch der Festkörpergehalt des Basislacks beeinflußt. Der Gehalt an organischem Lösemittel (L) im erfindungsgemäßen Basislacke wird daher stets so gewählt, dass der Basislack einen Festkörpergehalt von mindestens 35 Gew.-% aufweist. Der Festkörpergehalt des Basislacks wird in Anlehnung an DIN ISO 3251 mit einer Einwaage von 1,0 g bei einer Prüfdauer von 60 min bei einer Temperatur von 125 °C durchgeführt.

Die erfindungsgemäßen Basislacke sind wasserfrei. Unter einem wasserfreien Basislack wird ein Basislack verstanden, der völlig oder im wesentlichen frei von Wasser ist.

### Hilfs- und Zusatzstoffe (Z)

Der erfindungsgemäße Basislack enthält 0,5 bis 47 Gew.-%, bezogen auf das Gesamtgewicht des Basislacks, mindestens eines Hilfs- oder Zusatzstoffs (Z). Vorzugsweise enthält der erfindungsgemäße Basislack 1 bis 45 Gew.-%, besonders bevorzugt 1,5 bis 40 Gew.-%, jeweils bezogen auf das Gesamtgewicht des Basislacks, mindestens eines Hilfs- oder Zusatzstoffs (Z).

Geeignete Hilfs- oder Zusatzstoffe (Z) sind die üblicherweise in der Lackindustrie eingesetzten, bekannten Hilfs- und Zusatzstoffe. Beispiele für geeignete Hilfs- und Zusatzstoffe sind organische und anorganische Füllstoffe, z.B. Talkum, und/oder Farbstoffe (organische, im umgebenden Medium lösliche schwarze oder bunte Substanzen (vgl. Römpp Lacke und Druckfarben, Seite 221, Stichwort "Farbmittel")) sowie weitere übliche Hilfs- und Zusatzstoffe, wie z.B. Antioxidantien, Entlüftungsmittel, Netzmittel, Dispergiermittel, Emulgatoren, Rheologiehilfsmittel wie Verlaufsmittel, Verdickungsmittel, Polymermikroteilchen, Antiablaufmittel und Thixotropiermittel, Wachse und wachsartige Verbindungen, Slipadditive, Reaktivverdünner, Rieselhilfen, Sikkative, Bioziden, Additive zur Verbesserung der Untergrundbenetzung, Additive zur Verbesserung der Oberflächenglätte, Mattierungsmittel, Radikalfänger, Lichtschutzmittel, vorzugsweise UV-Absorber mit einem Absorptionsmaximum unter 370 nm und/oder HALS, Korrosionsinhibitoren, Flammschutzmittel oder Polymerisationsinhibitoren, wie sie in dem Buch "Lackadditive" von Johan Bielemann, Wiley-VCH, Weinheim, New York, 1998, im Detail beschrieben werden. Bevorzugte Hilfs- und Zusatzstoffe sind Rheologiehilfsmittel, Entlüftungsmittel, Netzmittel, Dispergiermittel, Wachse und wachsartige Verbindungen, UV-Absorber und Radikalfänger. Besonders bevorzugte Hilfs- und Zusatzstoffe sind UV-Absorber, Polymermikroteilchen, Netzmittel sowie Wachse und wachsartige Verbindungen.

### Polymermikroteilchen (M)

Geeignete Polymermikroteilchen (M) sind beispielsweise in der EP-A-480 959, Seite 3, Zeile 36, bis Seite 4, Zeile 35, der WO 96/24619, der WO 99/42529, der EP-B-1 173 491, EP-B-1 185 568, WO 03/089487, WO 03/089477, WO 01/72909 und WO 99/42531 beschrieben.

Geeignete Polymermikroteilchen weisen üblicherweise ein gewichtsmittleres Molekulargewicht von 2000 bis 100000 auf. Die Bestimmung des Molekulargewichts erfolgt mittels GPC-Analyse mit THF (+ 0,1% Essigsäure) als Eluent (1 ml/min) auf einer Styrol-Divinylbenzol-Säulenkombination. Die Kalibrierung wird mit Polystyrol-Standards durchgeführt.

Geeignete Polymermikroteilchen weisen außerdem üblicherweise eine mittlere Teilchengröße von 0,01 bis 10 µm, insbesondere von 0,01 bis 5 µm, und ganz besonders bevorzugt von 0,02 bis 2 µm, nach ISO 13320-1 auf.

Besonders bevorzugt eingesetzte Polymermikroteilchen weisen reaktive funktionelle Gruppen auf, die mit den funktionellen Gruppen des Vernetzungsmittels reagieren können. Insbesondere weisen die Polymermikroteilchen dabei Hydroxylgruppen auf. Hierbei weisen die Polymermikroteilchen bevorzugt eine Hydroxylzahl von 5 bis 150 mg KOH/g nach DIN 53240 auf. Hydroxylgruppenhaltige Polymermikroteilchen sind beispielsweise in der WO 01/72909 beschrieben.

Vernetzte Polymermikroteilchen sind beispielsweise dadurch erhältlich, indem ein Gemisch aus:
(a) einem ethylenisch ungesättigten Monomeren, das eine ethylenisch ungesättigte Gruppe pro Molekül enthält oder ein Gemisch aus solchen Monomeren und
(b) einem ethylenisch ungesättigten Monomeren, das mindestens zwei ethylenisch ungesättigte Gruppen pro Molekül enthält oder ein Gemisch aus solchen Monomeren

in einer wässrigen Phase ggf. in Gegenwart von Emulgatoren oder ggf. in Gegenwart eines Trägerharzes polymerisiert und die auf diese Weise erhaltene wässrige Polymermikroteilchendispersion anschließend in ein organisches Lösemittel oder ein Gemisch aus organischen Lösemitteln überführt wird.

Bevorzugt sind Polymermikroteilchen, die unter Verwendung von ionische und/oder polare Gruppen, vorzugsweise Hydroxylgruppen und/oder Carboxylgruppen enthaltenden Komponenten hergestellt worden sind. Die Komponenten (a) und (b9 sollen in der Regel zwischen 1 und 20, bevorzugt zwischen 3 und 15 Gew.-% ionische und/oder polare Gruppen enthalten.

Um ausreichend vernetzte Polymermikroteilchen zu erhalten, reicht es in der Regel aus, auf ein Mol der Komponente (a) 0,25 bis 1,2 Mol, bevorzugt 0,3 bis 1 Mol der Komponente einzusetzen.

Die in den Basislacken eingesetzten Polymermikroteilchen (M) können aber auch direkt in organischer Phase hergestellt werden.

Bevorzugt eingesetzte Polymermikroteilchen sind beispielsweise dadurch erhältlich, indem ein Gemisch aus:
(c) einem ethylenisch ungesättigten Monomeren (M1), das mindestens eine reaktive Gruppe (G1) pro Molekül enthält oder ein Gemisch aus solchen Monomeren (M1) und
(d) ggf. einem ethylenisch ungesättigten Monomeren (M2), das mindestens eine, von (G1) verschiedene, reaktive Gruppe (G2) pro Molekül enthält oder ein Gemisch aus solchen Monomeren (M2) und
(e) ggf. einem weiteren ethylenisch ungesättigten Monomeren (M3) oder ein Gemisch aus solchen Monomeren (M3)
einer Polymerisation in einem organischen Lösemittel ggf. in Gegenwart eines Trägerharzes unterworfen wird.

Geeignete Monomere (M1) sind beispielsweise Monomere, die Hydroxylgruppen, Carbamatgruppen, Aminogruppen, Alkoxymethyl-aminogruppen, Allophanatgruppen oder Iminogruppen, insbesondere Hydroxylgruppen, enthalten.

Die Monomeren (M1) mit den reaktiven Gruppen (G1) können dabei auch durch Reaktion zweier Verbindungen, von denen eine Verbindung (a) eine reaktive Gruppe (a) und mindestens eine ethylenisch ungesättigte Doppelbindung und die andere Verbindung eine mit ethylenisch ungesättigte Doppelbindung aufweist, hergestellt werden.

Geeignete Monomere (M2) sind beispielsweise Monomere, die Carboxylgruppen enthalten.

Geeignete Monomere (M3) sind die üblicherweise eingesetzten, sogenannten Neutralmonomere, also ethylenisch ungesättigte Monomere, die keine reaktiven Gruppen aufweisen.

### Wachse und wachsartige Verbindungen (W)

Der erfindungsgemäße Basislack kann als Zusatzstoff ein oder mehrere Wachse und/oder eine oder mehrere wachsartige Verbindungen enthalten. Unter "(W)" werden sowohl Wachse als auch wachsartige Verbindungen verstanden.

Geeignete Wachse und wachsartige Verbindungen werden beispielsweise in der WO 2008/058590 beschrieben.

Im Zusammenhang mit der vorliegenden Erfindung werden unter "Wachs" und "wachsartiger Verbindung" alle natürlichen und künstlich gewonnenen Stoffe verstanden, die folgende Eigenschaften aufweisen:
1. Bei 20 °C knetbar oder fest.
2. Grob- bis feinkristallin, durchscheinend bis opak.
3. Über 40 °C ohne Zersetzung schmelzend.
4. Schon wenig oberhalb des Schmelzpunktes niedrigviskos.
5. Stark temperaturabhängig in Konsistenz und Löslichkeit.
6. Unter leichtem Druck polierbar.

Erfüllt ein Stoff mehr als eine dieser Eigenschaften nicht, ist er kein "Wachs" mehr im Sinne dieser Erfindung (vgl. Ulimanns Enzyklopädie der technischen Chemie; 4. neubearbeitete und erweiterte Auflage; Verlag Chemie; Weinheim; Deerfield Beach, Florida; Basel, 1983, Seite 3).

Die Wachse oder wachsartigen Verbindungen (W) können modifiziert und/oder unmodifiziert sein. Geeignet sind alle an sich bekannten und üblichen Wachse, wobei aber bevorzugt synthetische Wachse eingesetzt werden.

Beispiele für natürliche Wachse sind pflanzliche Wachse, wie Carnaubawachs, Candelillawachs, Espartowachs, Guarumawachs, Japanwachs, Korkwachs, Montanwachs, Ouricurywachs, Reiskeimölwachs, Zuckerrohrwachs, tierische Wachse, wie Bienenwachs, Bürzeldrüsenfett, Wollwachs, Schellackwachs, Walrat, und Mineralwachse, wie Ceresin und Ozokerit.

Beispiele für chemisch modifizierte Wachse sind hydrierte Jojobawachse, Montanesterwachse und Sasolwachse.

Geeignet sind beispielsweise auch modifizierte und unmodifizierte Polyolefinwachse, wie Polyethylen- und Polypropylenwachse, Polyethylenglykolwachse und Polyamidwachse. Geeignet sind außerdem auch Polyacrylatpolymerisate und Polyacrylatcopolymerisate, die wie Wachs eine ausgeprägte Temperaturabhängigkeit der Löslichkeit in organischen Lösemitteln zeigen.

Die Wachse bzw. die Polyacrylatpolymerisate und Polyacrylatcopolymerisate haben gewöhnlich ein gewichtsmittleres Molekulargewicht zwischen 300 und 20000 g/mol, bevorzugt zwischen 1000 und 10000 g/mol und vorzugsweise Tropfpunkte nach Ubbelohde zwischen 70 und 180 °C. Der Tropfpunkt ist eine Kennzahl von Schmierstoffen. Er bezeichnet die Temperatur, bei der ein Schmierfett unter genormten Prüfbedingungen einen langziehenden Tropfen bildet. Er ist nach DIN ISO 2176 geregelt.

Die Polyethylen- und Polypropylenwachse sind entweder Homo- oder Copolymere mit üblicherweise 0,5 bis 40 Gew.-% Comonomereinheiten, die sich von gesättigten oder ungesättigten Monocarbonsäuren oder deren Amiden oder Estern herleiten. Beispiele solcher Comonomereinheiten sind u.a. die Reste von Acrylsäure, Methacrylsäure, Maleinsäure; Fumarsäure, Acrylamid, Stearinsäure oder Stearinsäureamid oder Vinylacetat. Die Polyolefinwachse sind im Handel unter vielfältigen Bezeichnungen erhältlich.

Als Polyamidwachse kommen alle üblicherweise in Beschichtungsmitteln eingesetzten Polyamidwachse, beispielsweise fettsäurehaltige Polyamidwachse, die im Handel beispielsweise unter dem Namen Disparlon® erhältlich sind, in Frage.

Geeignet sind außerdem wachsartige Polysiloxane, wie z.B. Polydimethylsiloxane, Polydiphenylsiloxane oder modifizierte Silikone, z.B. Polyester-, Polyether- und Acrylat-modifizierte Silikone.

Die Verbindung (W) wird bevorzugt in einer Menge von 0,2 bis 2 Gew.-%, besonders bevorzugt von 0,5 bis 1,5 Gew.-%, jeweils bezogen auf das Gesamtgewicht des Basislacks, eingesetzt.

### Anorganische Teilchen (N)

Der erfindungsgemäße Basislack kann als Zusatzstoff ein oder mehrere anorganische Teilchen (N), welches bzw. welche eine Teilchengröße von 1 bis 800 nm, bevorzugt von 3 bis 250 nm, besonders bevorzugt von 4 bis 100 nm, aufweisen, enthalten. Diese Teilchengröße bezieht sich auf die Größe der dispergierten Teilchen (N) vor Einarbeitung in den Basislack. Die Teilchengröße kann beispielsweise durch Elektronenmikroskopie ermittelt werden.

Geeignete anorganische Teilchen (N) werden beispielsweise in der WO 2008/058590 beschrieben.

Bevorzugt weisen das bzw. die anorganischen Teilchen (N) eine Primärteilchengröße von 3 bis 200 nm, insbesondere von 3 bis 30 nm, auf. Im Gegensatz zu den oben beschriebenen Pigmenten sind die in den Basislacken eingesetzten anorganischen Teilchen (N) üblicherweise im Wesentlichen farblos, insbesondere um nicht den Farbton des Basislacks zu beeinflussen.

Die anorganischen Teilchen (N) können als separate Teilchen oder in Form von Agglomeraten vorliegen, wobei aber bevorzugt separate Teilchen eingesetzt werden. Insbesondere sollten die anorganischen Teilchen (N) vor allem leicht und stabil in den Basislack einzuarbeiten sein, um den gewünschten Einsatz des Basislacks zu gewährleisten. Die anorganischen Teilchen (N) sollten daher entweder über längere Zeit (im Bereich der Automobillackierung beispielsweise über einen Zeitraum von bis zu 12 Monaten bei Lagerung von Temperaturen von bis zu 30 °C) stabil dispergiert bleiben oder aber leicht mit üblichen Mitteln der Farbmischung, wie z.B. mit Hilfe von Rührern, redispergierbar sein.

Bevorzugt werden anorganische Teilchen (N) eingesetzt, die eine Dichte von 0,8 bis 4,5 g/cm³ nach DIN 53217 aufweisen.

Die anorganischen Teilchen (N) werden üblicherweise ausgewählt aus der Gruppe der Verbindungen der Haupt- und Nebengruppen-Metalle, bevorzugt der Metalle der dritten bis fünften Hauptgruppe, der dritten bis sechsten sowie der ersten und zweiten Nebengruppe des Periodensystems der Elemente sowie den Lanthaniden, insbesondere Verbindungen von Bor, Aluminium, Gallium, Silicium, Barium, Germanium, Zinn, Arsen, Antimon, Silber, Zink, Titan, Zirkonium, Hafnium, Vanadium, Niob, Tantal, Molybdän, Wolfram und Cer, insbesondere Aluminium, Silizium, Barium, Silber, Cer, Titan und Zirconium.

Vorzugsweise handelt es sich bei den Verbindungen der Metalle um die Oxide, Oxidhydrate, Sulfate oder Phosphate. Geeignete anorganische Teilchen (N) werden bevorzugt ausgewählt aus der Gruppe bestehend aus hydrophilen und hydrophoben, insbesondere hydrophilen, Teilchen auf der Basis von Siliciumdioxid, Aluminiumoxid, Zinkoxid, Zirkoniumoxid, Bariumsulfat und der Polysäuren und Heteropolysäuren von Übergangsmetallen, vorzugsweise von Molybdän und Wolfram. Besonders bevorzugt werden Teilchen auf der Basis von Siliciumdioxid und/oder Aluminiumoxid verwendet, insbesondere pyrogenes oder kolloidales Siliciumdioxid.

Ganz besonders bevorzugt werden hydrophile pyrogene Siliciumdioxide verwendet, deren Agglomerate und Aggregate eine kettenförmige Struktur haben und die durch die Flammenhydrolyse von Siliziumtetrachlorid in einer Knallgasflamme herstellbar sind. Diese werden beispielweise von der Firma Degussa unter der Marke Aerosil® vertrieben.

Als anorganische Teilchen (N) können aber auch sogenannte Sole, insbesondere Organosole, eingesetzt werden. Derartige Sole sind beispielsweise in der US-A-4,522,958, Spalte 7, Zeile 26, bis Spalte 11, Zeile 14, beschrieben. Insbesondere sind hier Sole auf Basis von Kieselsäure zu nennen, bei denen die anorganischen Teilchen in-situ gebildet und während und/oder nach ihrer Bildung mit einem Stabilisator (S) modifiziert werden (sogenannte stabilisierte anorganische Teilchen). Die Teilchen können dabei mittels einer Vielzahl verschiedener, dem Fachmann bekannter Techniken hergestellt werden.

Es ist von Vorteil, wenn die anorganischen Teilchen (N) als Pasten eingearbeitet werden. Weitere Vorteile resultieren, wenn als Pastenharze oder Reibharze die im Basislack enthaltenen, bereits beschriebenen Bindemittel verwendet werden. Insbesondere werden als Pastenharze oder Reibharze für die Teilchen (N) Bindemittel verwendet, die auch zum Anreiben der Pigmente verwendet werden.

Bevorzugt werden die Teilchen (N) in einer Menge von 0,2 bis 2 Gew.-%, besonders bevorzugt von 0,5 bis 1,5 Gew.-%, jeweils bezogen auf das Gesamtgewicht des Basislacks, eingesetzt.

### Stabilisator (S)

Die anorganischen Teilchen (N) sind zumindest teilweise mit einem Stabilisator (S), der mindestens eine Gruppe (S1), die mit der Oberfläche der anorganischen Teilchen (N) in Wechselwirkung treten kann, und eine oder mehrere hydrophobe Teilstrukturen aufweist, enthält, modifiziert.

Geeignete Stabilisatoren (S) werden beispielsweise in der WO 2008/058590 beschrieben.

Der Stabilisator (S) kann über die Gruppen (S1) mit den anorganischen Teilchen (N) in Wechselwirkung treten. Dabei ist es möglich, dass der Stabilisator mit den anorganischen Teilchen nur über physikalische Kräfte in Wechselwirkung tritt, es kann aber auch zumindest teilweise eine chemische Reaktion zwischen den Gruppen (S1) und den an der Oberfläche der anorganischen Teilchen üblicherweise befindlichen funktionellen Gruppen stattfinden. So haben insbesondere die hydrophilen anorganischen Teilchen an ihrer Oberfläche Hydroxylgruppen (z.B: bei den SiO₂-Typen in Form von SiOH-Gruppen), die sowohl chemisch als auch über physikalische Wechselwirkungen, wie z.B. Wasserstoffbrücken, mit den Gruppen (S1) in Wechselwirkung treten können.

Bevorzugt sind die Gruppen (S1) des Stabilisators ausgewählt aus der Gruppe Hydroxyl-, Carboxyl-, Ether-, Phosphat-, Phosphonat-, Bisphosphonat, Sulfat oder Sulfonatgruppen oder stickstoffhaltiger, hydrophiler Gruppen oder Mischungen davon. Besonders bevorzugt sind Stabilisatoren (S), die sowohl Hydroxyl- als auch Carboxlgruppen enthalten. Weiterhin besonders bevorzugt sind Stabilisatoren (S), die sowohl Hydroxylgruppen als auch Carboxylgruppen und Ethergruppen enthalten. Insbesondere werden Stabilisatoren (S) eingesetzt, die eine Hydroxylzahl von 10 bis 150 mg KOH/g nach DIN 53240 und eine Säurezahl von 2 bis 50 mg KOH/g nach DIN EN ISO 3682 aufweisen; jeweils bezogen auf den Festkörper des Stabilisators Der Stabilisator (S) kann noch eine oder mehrere hydrophobe Teilstrukturen aufweist. Diese hydrophoben Reste können in Wechselwirkung mit den organischen Bestandteilen des Basislacks, insbesondere mit dem Lösemittel, den Bindemitteln und dem Wachs bzw. der wachsartigen Verbindung (W), treten.

Der Stabilisator (S) kann also insbesondere ein oder mehrere organische Reste (R1), der bzw. die hydrophobe Teilstrukturen aufweisen, enthalten. Darüber hinaus kann bzw. können der bzw. die organische Reste (R1) ggf. noch hydrophile Teilstrukturen aufweisen und/oder die Gruppen (S1) können zumindest teilweise oder vollständig an diese organischen Reste (R1) gebunden sein.

Es ist bevorzugt, dass die hydrophoben Teilstrukturen des Stabilisators (S) zumindest teilweise ausgewählt sind aus der Gruppe der Alkyl- oder Alkenylgruppen, insbesondere Alkyl- oder Alkenylgruppen mit 5 bis 50 C-Atomen.

Besonders bevorzugt werden als hydrophobe Teilstrukturen die Reste von gesättigten und/oder ungesättigten Fettsäuren eingesetzt, insbesondere von gesättigten und/oder ungesättigten Fettsäuren mit 5 bis 30 Kohlenstoffatomen im Molekül, wie z.B. Reste der Valeriansäure, Capronsäure, der Önanthsäure, Caprylsäure, Perlagonsäure, Caprinsäure, Undecylsäure, Laurinsäure, Myristinsäure, Palmitinsäure, Stearinsäure, Ölsäure, Elaidinsäure, Arachinsäure, Behensäure, Lignocerinsäure, Cerotinsäure, Melissinsäure, Linolsäure, Ricinensäure, Ricinolsäure, Linolensäure, Arachidonsäure, Clupanodonsäure, alpha-Elaeostearinsäure, alpha-Licansäure, alpha-Parinarsäure, Ricinolsäure und Isanolsäure und Mischungen dieser Fettsäuren und/oder die entsprechenden Hydroxysäuren der genannten Fettsäuren bzw. deren Mischungen. Ganz besonders bevorzugt werden Stabilisatoren eingesetzt, die Reste der Hydroxyvaleriansäure, Hydroxycapronsäure, Hydroxystearinsäure, Hydroxylaurinsäure, Ricinolsäure oder deren Mischungen enthalten.

Geeignet sind ferner auch die entsprechenden Reste von Dimer- und Trimerfettsäuren sowie deren Mischungen und die Reste der entsprechenden Mischungen der Dimer und/oder Trimerfettsäuren mit den genannten Fettsäuren.

Ganz besonders bevorzugt werden als Stabilisator (S) Ester der genannten (Hydroxy)Fettsäuren, (Hydroxy)Dimerfettsäuren und/oder (Hydroxy)Trimerfettsäuren, eingesetzt, insbesondere Ester mit Polyalkylenglykolen, besonders bevorzugt Ester mit Polyalkylenglykolen mit 6 bis 20 C-Atomen, wie Diethylenglykol, Triethylenglykol, Tetraethylenglykol, Dipropylenglykol, Tripropylenglykol und Mischungen davon. Hier sind insbesondere Ester von Hydroxyvaleriansäure, Hydroxycapronsäure und Hydroxystearinsäure mit Triethylenglykol, Tetraethylenglykol und Mischungen dieser Hydroxylverbindungen, dieser Ester und Mischungen der Ester mit den Säuren zu nennen.

Als Stabilisator (S) geeignet sind beispielsweise auch die entsprechenden handelsüblichen Verbindungen, sofern sie die erforderliche Struktur aufweisen. Geeignet sind daher beispielsweise die im Handel unter den Bezeichnungen Solsperse® der Firma Avecia GmbH, insbesondere Solsperse® 39000, Dispers® der Firma Th. Goldschmidt, insbesondere Dispers® 652, und entsprechende Additive der Firma Degussa.

Der Stabilisator (S) wird üblicherweise in einer Menge von 3 bis 40 Gew.-%, insbesondere von 5 bis 20 Gew.-%, ganz besonders bevorzugt von 8 bis 12 Gew.-%, jeweils bezogen auf das Gewicht der eingesetzten anorganischen Teilchen (N), eingesetzt.

Die Modifizierung der anorganischen Teilchen (N) mit dem Stabilisator (S) gewährleistet u.a., dass auch bei Lagerung bei 40 °C über 28 Tage keine signifikante Verschlechterung der Eigenschaften sowohl der Basislacke als auch der aus diesen gelagerten Basislacken hergestellten Beschichtungen, insbesondere keine Verschlechterung der rheologischen Eigenschaften der Basislacke und keine Verschlechterung der optischen Eigenschaften der resultierenden Beschichtungen, auftritt.

Vorteilhafte Basislacke werden insbesondere erhalten, wenn die Teilchen (N) und die Verbindung(en) (W) in solchen Mengen eingesetzt werden, dass die Gesamtmenge an anorganischen Teilchen (N) plus Wachs und/oder wachsartiger Verbindung (W) von 0,4 bis 4 Gew.-%, besonders bevorzugt von 1 bis 3 Gew.-%, beträgt, jeweils bezogen auf das Gesamtgewicht des Basislacks.

Vorteilhafterweise wird die Gesamtmenge an anorganischen Teilchen (N) plus Wachs und/oder wachsartiger Verbindung (W) auf den Gehalt an farbgebenden Pigmenten ohne den Gehalt an Metallic-Pigmenten abgestimmt. Je weniger farbgebende Pigmente der Basislack enthält, desto höher ist die Gesamtmenge an anorganischen Teilchen (N) plus Wachs und/oder wachsartiger Verbindung (W), da bei geringem Gehalt an farbgebenden Pigmenten im Allgemeinen der Flop wichtiger wird. Bei Beschichtungsmitteln, die keine Metallic- bzw. Effektpigmente enthalten, sogenannten Uni-Basislacken, wird ebenfalls die Kombination aus anorganischen Teilchen (N) plus Wachs und/oder wachsartiger Verbindung (W) eingesetzt, die in diesem Fall insbesondere stabilisierend wirkt, wobei hier aber im Allgemeinen geringere Gesamtmengen an anorganischen Teilchen (N) plus Wachs und/oder wachsartiger Verbindung (W) ausreichend sind.

### Herstellung und Verwendung des erfindungsgemäßen Basislacks

Ein weiterer Gegenstand der Erfindung ist ein Verfahren zur Herstellung eines erfindungsgemäßen wasserfreien High-Solid-Basislacks. Die Herstellung des erfindungsgemäßen Basislacks kann dadurch erfolgen, dass die Bestandteile miteinander vermischt und homogenisiert werden.

Ein weiterer Gegenstand der Erfindung ist die Verwendung eines erfindungsgemäßen wasserfreien High-Solid-Basislacks zur Herstellung einer Basislackierung, sowie die so erhaltene Basislackierung.

Ein weiterer Gegenstand der Erfindung ist die Verwendung eines erfindungsgemäßen wasserfreien High-Solid-Basislacks zur Herstellung einer Mehrschichtlackierung.

### Mehrschichtlackierung und Verfahren zu ihrer Herstellung

Ein weiterer Gegenstand der Erfindung ist eine Mehrschichtlackierung, die mindestens eine Basislackierung aus dem erfindungsgemäßen Basislack und mindestens eine Klarlackierung umfasst, sowie ein Verfahren zur Herstellung der erfindungsgemäßen Mehrschichtlackierung.

Unter einer Mehrschichtlackierung wird eine Lackierung verstanden, die mindestens eine Basislackierung und mindestens eine Klarlackierung umfasst.

Unter einer Basislackierung wird eine Lackierung verstanden, die aus einem Basislack, d.h. aus einem pigmentierten Beschichtungsmittel, erhalten wurde.

Unter einer Klarlackierung wird eine Lackierung verstanden, die aus einem transparenten Beschichtungsmittel erhalten wurde.

Zur Herstellung der Klarlackierung der erfindungsgemäßen Mehrschichtlackierung sind alle üblicherweise eingesetzten transparenten Beschichtungsmittel geeignet, wie beispielsweise üblicherweise eingesetzte wässrige oder lösemittelhaltige transparente Beschichtungsmittel, die sowohl als Einkomponenten- als auch als Zwei- oder Mehrkomponenten-Beschichtungsmittel formuliert sein können. Geeignet sind ferner auch Pulverslurry-Klarlacke. Bevorzugt weisen die transparenten Beschichtungsmittel. (Klarlacke) einen Festkörperanteil von mindestens 40 Gew.-% auf. Die eingesetzten transparenten Beschichtungsmittel können thermisch und/oder mittels Strahlung, insbesondere mittels UV-Strahlung, härtbar sein.

Die transparenten Beschichtungsmittel enthalten üblicherweise mindestens ein Bindemittel mit funktionellen Gruppen sowie mindestens einen Vernetzer mit einer zu den funktionellen Gruppen des Bindemittels komplementären Funktionalität. Beispiele für solche komplementären Funktionalitäten sind insbesondere die folgenden zueinander jeweils komplementären Paare (a / b): (Carboxyl / Epoxy), (Amin oder Thiol oder Hydroxyl / blockiertes oder freies Isocyanat oder alkoxylierte Aminogruppen oder umesterungsfähige Gruppen), ((Meth)Acryloyl / CH-acide oder Amin oder Hydroxyl oder Thiol), (Carbamat / alkoxylierte Aminogruppen) und ((Meth)Acryloyl / (Meth)Acryloyl).

Eingesetzt werden insbesondere transparente Beschichtungsmittel auf Basis von Polyurethanharzen und/oder Polyacrylatharzen und/oder Polyesterharzen, bevorzugt mit Hydroxyl-, Amino-, Carbamat-, Carboxyl, (Meth)acryloyl- und/oder Thiolgruppen in Kombination mit den entsprechenden Vernetzern, insbesondere in Kombination mit Isocyanaten, Aminoplastharzen, Anhydriden u.ä.

Neben dem Bindemittel und Vernetzer enthalten die transparenten Beschichtungsmittel übliche Hilfs- und Zusatzstoffe, wie beispielsweise Katalysatoren für die Vernetzung, Entschäumer, Haftvermittler, Additive zur Verbesserung der Untergrundbenetzung, Additive zur Verbesserung der Oberflächenglätte, Mattierungsmittel, Lichtschutzmittel, vorzugsweise UV-Absorber mit einem Absorptionsmaximum unter 370 nm und/oder HALS, Korrosionsinhibitoren, Biozide, Flammschutzmittel oder Polymerisationsinhibitoren, wie sie in dem Buch "Lackadditive" von Johan Bielemann, Wiley-VCH, Weinheim, New York, 1998, im Detail beschrieben werden.

Geeignete transparente Beschichtungsmittel sind beispielsweise in der WO 03/050194 A1, in der US 2008/076868 A1 und in der WO 06/063304 A1 beschrieben.

Die erfindungsgemäße Basislackierung umfasst mindestens eine Basislackierung, die aus einem erfindungsgemäßen Basislack erhalten wurde.

Die erfindungsgemäße Mehrschichtlackierung umfasst mindestens eine Basislackierung aus dem erfindungsgemäßen Basislack und mindestens eine Klarlackierung. Die erfindungsgemäße Mehrschichtlackierung kann eine oder mehrere Basislackierungen und eine oder mehrere Klarlackierungen umfassen. Bevorzugt umfasst die erfindungsgemäße Mehrschichtlackierung genau eine Basislackierung und genau eine Klarlackierung.

Die erfindungsgemäße Lackierung, insbesondere Mehrschichtlackierung, kann auf beliebige Substrate aufgebracht werden. Die Substrate können aus den unterschiedlichsten Materialien und Kombinationen von Materialien aufgebaut sein. Vorzugsweise bestehen sie aus Metallen, Kunststoffen und/oder Glas, besonders bevorzugt aus Metall und/oder Kunststoff.

Die Substrate sind üblicherweise mit einer Grundierung und ggf. einem Füller versehen, die mit den üblichen Verfahren, wie Elektrotauchlackierung, Tauchen, Rakeln, Spritzen, Walzen o. ä., appliziert werden. Bevorzugt wird die Grundierung zumindest teilweise oder vollständig ausgehärtet, ehe das pigmentierte Beschichtungsmittel appliziert wird. Die Aushärtung der Grundierung bzw. des Füllers erfolgt üblicherweise durch Erhitzen auf eine Temperatur zwischen 80 und 170°C für eine Zeit von 3 bis 30 min.

Bei dem erfindungsgemäßen Verfahren zur Herstellung einer Basislackierung wird mindestens ein erfindungsgemäßer Basislack auf ein gegebenenfalls vorbeschichtetes Substrat appliziert.

Bei dem erfindungsgemäßen Verfahren zur Herstellung einer Mehrschichtlackierung wird in der Reihenfolge a. zunächst mindestens ein erfindungsgemäßer Basislack und anschließend b. mindestens ein Klarlack (transparentes Beschichtungsmittel) auf ein gegebenenfalls vorbeschichtetes Substrat appliziert.

Das ggf. aufgebrachte transparente Beschichtungsmittel (CC, Klarlack) wird ebenso wie das pigmentierte Beschichtungsmittel (BC, Basislack) mittels üblicher Verfahren zur Applikation von flüssigen Beschichtungsmitteln, wie beispielsweise Tauchen, Rakeln, Spritzen, Walzen o.ä., insbesondere aber mittels Spritzen, appliziert. Vorzugsweise werden Spritzapplikationsmethoden angewandt, wie zum Beispiel Druckluftspritzen, Airless-Spritzen, Hochrotation, elektrostatischer Sprühauftrag (ESTA), gegebenenfalls verbunden mit Heißspritzapplikation wie zum Beispiel Hot-Air-Heißspritzen. Besonders vorteilhaft ist es, das pigmentierte Beschichtungsmittel in einem ersten Auftrag durch ESTA und einem zweiten Auftrag pneumatisch zu applizieren.

Sofern noch ein transparentes Beschichtungsmittel (CC) appliziert wird, wird die pigmentierte Beschichtung (BC) kurz abgelüftet oder kurz getrocknet, im Allgemeinen bei einer Temperatur zwischen 30 und kleiner 100°C für eine Zeit von 1 bis 15 min. Danach wird das transparente Beschichtungsmittel appliziert.

Die applizierte pigmentierte Schicht (BC) und die ggf. applizierte transparente Schicht (CC) werden gemeinsam thermisch gehärtet. Sofern das transparente Beschichtungsmittel (CC) auch noch mit aktinischer Strahlung härtbar ist, erfolgt noch eine Nachhärtung durch Bestrahlung mit aktinischer Strahlung. Die Aushärtung kann nach einer gewissen Ruhezeit erfolgen. Sie kann eine Dauer von 30 sec bis 2 h, vorzugsweise 1 min bis 1 h und insbesondere 1 bis 45 min haben. Die Ruhezeit dient beispielsweise zum Verlauf und zur Entgasung der Lackschichten oder zum Verdunsten von flüchtigen Bestandteilen. Die Ruhezeit kann durch die Anwendung erhöhter Temperaturen bis 90°C und/oder durch eine reduzierte Luftfeuchte (< 10 g Wasser/kg Luft) unterstützt und/oder verkürzt werden, sofern hierbei keine Schädigungen oder Veränderungen der Lackschichten eintreten, etwa eine vorzeitige vollständige Vernetzung.

Die Aushärtung erfolgt üblicherweise bei einer Temperatur zwischen 90 und 160°C während einer Zeit von 15 bis 90 min.

Für die Trocknung bzw. Konditionierung der nassen pigmentierten Beschichtung sowie ggf. der nassen transparenten Beschichtung werden bevorzugt thermische und/oder Konvektionsverfahren verwendet, wobei übliche und bekannten Vorrichtungen, wie Durchlauföfen, NIR- und IR- Heizstrahler, Gebläse und Blastunnel, eingesetzt werden. Diese Vorrichtungen können auch miteinander kombiniert werden.

Bei den erfindungsgemäßen Lackierungen und Mehrschichtlackierungen weist die Basislackierung im Allgemeinen eine Trockenfilmschichtdicke von 3 bis 40 µm, vorteilhafterweise von 5 bis 30 µm, noch vorteilhafter von 7 bis 25 µm, bevorzugt von 10 - 20 µm, besonders bevorzugt von 10 - 16 µm und ganz besonders bevorzugt von 11 - 13 µm auf.

Bei den erfindungsgemäßen Mehrschichtlackierungen weist die Klarlackierung im Allgemeinen eine Trockenfilmschichtdicke von 10 bis 120 µm, bevorzugt von 30 bis 80 µm, insbesondere von 40 bis 70 µm, auf.

Ein weiterer Gegenstand der Erfindung ist die Verwendung der erfindungsgemäßen Lackierungen, insbesondere der erfindungsgemäßen Mehrschichtlackierungen, zur Beschichtung der oben angegebenen Substrate.

Die erfindungsgemäßen Lackierungen, insbesondere Mehrschichtlackierungen werden insbesondere im Bereich der Automobilserienlackierung, aber auch im Bereich der Nutzfahrzeug- und der Autoreparatur-Lackierung eingesetzt, und zwar für die Beschichtung von Kraftfahrzeugkarossen oder von Karosserie-Innenbauteilen oder Karosserie-Außenbauteilen. Sie sind aber auch für andere Bereiche geeignet, wie beispielsweise für die Beschichtung von Bauteilen für den Schiff- und Flugzeugbau oder von Bauteilen für Haushalts- und Elektrogerät oder deren Teilen.

Ein weiterer Gegenstand der Erfindung sind Substrate, die mit mindestens einem erfindungsgemäßen High-Solid-Basislack beschichtet sind. Bevorzugt handelt es sich bei diesen erfindungsgemäßen Substraten um metallische Substrate und/oder Kunststoff-Substrate. Bevorzugt sind Substrate, die mit einer erfindungsgemäßen Mehrschichtlackierung beschichtet sind. Besonders bevorzugt sind metallische und/oder Kunststoff-Substrate, die mit einer erfindungsgemäßen Mehrschichtlackierung beschichtet sind.

### Beispiele

In den Beispielen wird die Säurezahl (SZ) nach DIN 53402 und die OH-Zahl (Hydroxylzahl) nach DIN 53240 bestimmt.

Die Bestimmung des Molekulargewichts der Polyesterharze (PE) erfolgt mittels GPC-Analyse mit THF (+0,1% Essigsäure) als Eluent (1 ml/min) auf einer Styrol-Divinylbenzol-Säulenkombination. Die Kalibrierung wird mit Polystyrol-Standards durchgeführt.

### 1. Herstellung des Acrylat-Bindemittels (AC)

In einem Reaktor werden 13,2 Gew.-Teile Solvesso 100 vorgelegt und auf 167°C erhitzt. Der Reaktor wird bei einem Druck von 0,35 bar und über einen Zeitraum von 4 h simultan mit einer Monomerenmischung, bestehend aus 2,1 Gew.-Teilen Acrylsäure, 10,8 Gew.-Teilen Hydroxyethylacrylat, 11,5 Gew.-Teilen 2-Ethylhexylacrylat, 11,5 Gew.-Teilen Butylacrylat und 14,3 Gew.-Teilen Styrol, und einer Initiatormischung, bestehend aus 0,7 Gew.-Teilen Di-tert.-Butylperoxid und 11,1 Gew.-Teilen einer Lösung von Dicumylperoxid in Solvesso 100 (50%-ig), versetzt. Anschließend wird 1 h bei oben genannter Temperatur und Druck gehalten, bevor über einen Zeitraum von 1 h 21,5 Gew.-Teile ε-Caprolacton zugegeben werden. Es wird auf 150°C abgekühlt und 1,5 h bei einem Druck von 0,35 bar gehalten. Das Reaktionsgemisch wird abgekühlt und mit Solvesso 100 auf einen Festkörper von 75% eingestellt. Das so erhaltene Acrylatharz weist eine Säurezahl von 23 mg KOH/g und eine OH-Zahl von 73 mg KOH/g, jeweils bezogen auf den Festkörper, auf.

### 2. Herstellung der Polyester-Bindemittel (PE-1 bis PE-7)

### 2.1. Herstellung eines Polyesters (PE-1) mit SZ > 20

Eine Mischung aus 40,0 Gew.-Teilen Adipinsäure, 4,0 Gew,-Teilen ortho-Phthalsäure, 43,0 Gew.-Teilen Trimethylolpropan, 10,0 Gew.-Teilen para-tert-Butylbenzoesäure und 1,2 Gew.-Teilen Isononansäure wird in einem mit einem Wasserabscheider ausgestatteten Rührkessel vorgelegt und unter Stickstoffatmosphäre unter Rühren auf 230 °C erhitzt. Der Reaktionsverlauf wird dabei mittels eines Wasserabscheiders und Bestimmung der Säurezahl verfolgt. Das dabei freigesetzte Wasser wird im Wasserabscheider aufgefangen. Die Reaktionsmischung wird so lange bei 230 °C gehalten, bis die Säurezahl einen Wert von 422 mg KOH/g erreicht. Nach Abkühlung unter 100°C wird der Festkörper durch Zugabe von Xylol auf 70,0% eingestellt.

Das so erhaltene Polyesterharz PE-1 weist eine Säurezahl von 94 mg KOH/g und eine OH-Zahl von 421 mg KOH/g, jeweils bezogen auf den Festkörper, auf. Das gewichtsmittlere Molekulargewicht beträgt 2120 g/mol.

### 2.2. Herstellung eines Polyesters (PE-2) mit SZ > 20

In einem Reaktor wird eine Mischung aus 29,1 Gew.-Teilen Dimerfettsäure, 28,5 Gew.-Teilen 1,6-Hexandiol, 8,4 Gew.-Teilen iso-Phthalsäure und 1,2 Gew.-Teilen Toluol unter einer Stickstoff-Atmosphäre langsam auf 154°C erhitzt. Diese Mischung wird anschließend innerhalb von 40 min auf 193°C erhitzt. Der Reaktionsverlauf wird dabei mittels eines Wasserabscheiders verfolgt. Nach Erreichen einer Säurezahl von 10 mg KOH/g wird das Reaktionsgemisch auf 149°C abgekühlt. Anschließend werden 11,2 Gew.-Teile Trimellitsäure-Anhydrid unter Verwendung eines Tropftrichters langsam zugegeben.

Nach vollständiger Zugabe des Trimellitsäure-Anhydrids wird auf 166°C erhitzt. Der Reaktionsverlauf wird dabei durch Bestimmung der Säurezahl verfolgt. Nach Erreichen einer Säurezahl von 32 mg KOH/g wird der Reaktor auf 107°C abgekühlt und eine Mischung von 10,9 Gew.-Teilen n-Butanol, 9,6 Gew.-Teilen n-Propoxypropanol und 0,01 Gew.-Teilen Dimethanolamin unter Verwendung eines Tropftrichters langsam zugegeben. Nach Abkühlung auf 49°C wird der Festkörper durch Zugabe von 1,2 Gew.-Teilen n-Butanol auf 73,0% eingestellt.

Das so erhaltene Polyesterharz PE-2 weist eine Säurezahl von 31 mg KOH/g und eine OH-Zahl von 422 mg KOH/g, jeweils bezogen auf den Festkörper, auf. Das gewichtsmittlere Molekulargewicht beträgt 4511 g/mol.

### 2.3. Herstellung eines Polyesters (PE-3) mit SZ > 20

Eine Mischung aus 291 Gew.-Teilen Adipinsäure, 16,0 Gew.-Teilen Fumarsäure, 40,9 Gew.-Teilen Neopentylglykol, 15,0 Gew.-Teilen Cyclohexandimethanol wird in einem mit einem Wasserabscheider ausgestatteten Rührkessel vorgelegt und unter Stickstoffatmosphäre unter Rühren auf 230 °C erhitzt. Das dabei freigesetzte Wasser wird im Wasserabscheider aufgefangen. Die Reaktionsmischung wird so lange bei 230 °C gehalten, bis die Säurezahl einen Wert von 22 mg KOH/g erreicht. Nach Abkühlung unter 100°C wird der Festkörper durch Zugabe von Xylol auf 63,0% eingestellt.

Das so erhaltene Polyesterharz PE-3 weist eine Säurezahl von 21 mg KOH/g und eine OH-Zahl von 51 mg KOH/g, jeweils bezogen auf den Festkörper, auf. Das gewichtsmittlere Molekulargewicht beträgt 4854 g/mol.

### 2.4. Herstellung eines Polyesters (PE-4) mit SZ < 20

In einem Reaktor wird eine Mischung aus 12,7 Gew.-Teilen Trimethyiolpropan, 6,5 Gew.-Teilen Ethylenglykol, 13,6 Gew.-Teilen Cyclohexandimethanol, 29,1 Gew.-Teilen Hexa-Hydro-Phthalsäureanhydrid, 9,9 Gew.-Teilen Neopentylglykol, 28,1 Gew.-Teilen Pthalsäureanhydrid unter einer Stickstoff-Atmosphäre langsam auf 140°C erhitzt. Diese Mischung wird anschließend innerhalb von 40 min auf 220°C erhitzt. Der Reaktionsverlauf wird dabei mittels eines Wasserabscheiders und Bestimmung der Säurezahl verfolgt. Nach Erreichen einer Säurezahl von 19 mg KOH/g wird der Reaktor auf 195°C abgekühlt. Nach weiterer Abkühlung unter 100°C wird der Festkörper durch Zugabe von einer 1:1 Mischung von Butylacetat und Solventnaphtha auf 60,0% eingestellt.

Das so erhaltene Polyesterharz PE-4 weist eine Säurezahl von 18 mg KOH/g und eine OH-Zahl von 80 mg KOH/g, jeweils bezogen auf den Festkörper, auf. Das gewichtsmittlere Molekulargewicht beträgt 9500 g/mol.

### 2.5. Herstellung eines Polyesters (PE-5) mit SZ < 20

In einem Reaktor wird eine Mischung aus 5,2 Gew.-Teilen Glycerin, 7,2 Gew.-Teilen Trimethylolpropan, 13,5 Gew.-Teilen 1,6-Hexandiol, 20,2 Gew.-Teilen Neopentylglykol, 18,7 Gew.-Teilen Adipinsäure, 23,5 Gew.-Teilen Phthalsäureanhydrid und 11,7 Gew.-Teilen Cardura E10 unter einer Stickstoff-Atmosphäre langsam auf 140°C erhitzt. Diese Mischung wird anschließend innerhalb von 40 min auf 220°C erhitzt. Der Reaktionsverlauf wird dabei mittels eines Wasserabscheiders und Bestimmung der Säurezahl verfolgt. Nach Erreichen einer Säurezahl von 7 mg KOH/g wird der Reaktor auf 195°C abgekühlt. Nach weiterer Abkühlung unter 100°C wird der Festkörper durch Zugabe einer Mischung von 0,5 Gew.-Teilen Cyclohexan, 42,9 Gew.-Teilen Solventnaphtha, 5,7 Gew.-Teilen Methoxypropylacetat und 5,7 Gew.-Teilen Ethylethoxypropionat auf 65,0% eingestellt.

Das so erhaltene Polyesterharz PE-5 weist eine Säurezahl von 8 mg KOH/g und eine OH-Zahl von 102 mg KOH/g, jeweils bezogen auf den Festkörper, auf. Das gewichtsmittlere Molekulargewicht beträgt 14500 g/mol.

### 2.6. Herstellung eines Polyesters (PE-6) mit SZ < 20

59,3 Gew.-Teile 1,6-Hexandiol, 3,9 Gew.-Teile Bernsteinsäure und 27,6 Gew.-Teile Hexahydrophthalsäureanhydrid werden in einem mit einem Wasserabscheider ausgestatteten Rührkessel vorgelegt und unter Stickstoffatmosphäre unter Rühren so lange erhitzt, bis Wasser kondensiert. Die Mischung wird auf 80 °C abgekühlt und 8,2 Gew.-Teile Dicarbonsäuregemisch werden zugegeben. Anschließend wird die Reaktionsmischung auf 230 °C erhitzt und so lange bei dieser Temperatur gerührt und Wasser abdestilliert, bis die Säurezahl einen Wert von 5 mg KOH/g unterschreitet. Nach Abkühlung unter 100°C wird der Festkörper durch Zugabe von Butylacetat auf 88% eingestellt.

Das so erhaltene Polyesterharz PE-6 weist eine Säurezahl von 5 mg KOH/g und eine OH-Zahl von 287 mg KOH/g, jeweils bezogen auf den Festkörper, auf. Das gewichtsmittlere Molekulargewicht beträgt 1239 g/mol.

### 2.7. Herstellung eines Polyesters (PE-7) mit SZ < 20

Eine Mischung aus 54,0 Gew.-Teilen Cyclohexandimethanol, 10,0 Gew.-Teilen Bernsteinsäure, 25,0 Gew.-Teilen Dicarbonsäuregemisch und 9,5 Gew.-Teilen n-Diethylenglykol werden in einem mit einem Wasserabscheider ausgestatteten Rührkessel vorgelegt und unter Stickstoffatmosphäre unter Rühren auf 230 °C erhitzt. Das dabei freigesetzte Wasser wird im Wasserabscheider aufgefangen. Die Reaktionsmischung wird so lange bei 230 °C gehalten, bis die Säurezahl einen Wert von 5 mg KOH/g unterschreitet. Nach Abkühlung unter 100°C wird der Festkörper durch Zugabe von Butylacetat auf 92% eingestellt.

Das so erhaltene Polyesterharz PE-7 weist eine Säurezahl von 3 mg KOH/g und eine OH-Zahl von 244 mg KOH/g, jeweils bezogen auf den Festkörper, auf. Das gewichtsmittlere Molekulargewicht beträgt 1570 g/mol.

### 3. Herstellung von Polymermikroteilchen (M)

Für die Herstellung von Polymermikroteilchen wird zunächst ein Trägerharz hergestellt. Dazu werden in einem Reaktor 5,8 Gew.-Teile Xylol, 5,8 Gew.-Teile Toluol und 0,2 Gew.-Teile Methansulfonsäure vorgelegt und auf 104°C erhitzt. Anschließend werden dem Reaktor 80,6 Gew.-Teile 12-Hydroxystearinsäure zugeführt und das Reaktionsgemisch bei 171°C im Rückfluss unter Entzug des Reaktionswassers gekocht. Die Reaktion ist bei Erreichen einer Säurezahl von 35 mg KOH/g, bezogen auf den Festkörpergehalt des Produkts (1 h / 130°C), beendet. Nach Abkühlen wird der Festkörpergehalt mit 8,0 Gew.-Teilen Solventnaphtha auf 80%, bezogen auf das Gesamtgewicht der Trägerharzlösung, eingestellt.

In einem zweiten Schritt werden in einem Reaktor 43,2 Gew.-Teile Solventnaphtha, 0,08 Gew.-Teile N,N-Dimethylcocosamin und 1,0 Gew.-Teile Ethylacetat vorgelegt und auf 104°C erhitzt. Der Reaktor wird bei einem Druck von 0,69 bar innerhalb von 2 h simultan mit einer Monomerenmischung, bestehend aus 27,6 Gew.-Teilen Methylmethacrylat, 3,8 Gew.-Teilen 2-Hydroxypropylmethacrylat, 0,8 Gew.-Teilen Glycidylmethacrylat, 12,8 Gew.-Teilen der oben beschriebenen Trägerharzlösung, 1,5 Gew.-Teilen Methacrylsäure und 1,5 Gew.-Teilen Octylmercaptan, und einer Initiatormischung, bestehend aus 2,3 Gew.-Teilen Tert.-Butylperoxy-2-ethylhexanoat und 5,1 Gew.-Teilen Solventnaphtha, versetzt. Anschließend wird 3 h bei oben genannter Temperatur und Druck gehalten, bevor abgekühlt und mit Solventnaphtha auf einen Festkörper von 41,0% eingestellt wird.

### 4. Herstellung von stabilisierten anorganischen Teilchen (N)

In einer Vorlage werden 10,0 Gew.-Teile des unter 1. beschriebenen Acrylat-Bindemittels (AC), 6,0 Gew.-Teile Degussa Aerosil® 380 (handelsübliche hydrophile pyrogene Kieselsäure der Firma Degussa AG mit einer spezifischen Oberfläche (BET) von 380 m²/g, einer mittleren Größe der Primärteilchen von 7 nm und einem SiO₂-Gehalt von mindestens 99,8 Gew.%, bezogen auf die geglühte Substanz), 41,7 Gew.-Teile Solventnaphtha, 41,7 Gew.-Teile Butylacetat und 0,6 Gew.-Teile eines Fettsäureesters als Stabilisierungsmittel (S) mit einem nichtflüchtigen Anteil von 96,2 % (bei 2 h bei 130°C), einer OH-Zahl von 50 mg KOH/g und einer Säurezahl von 17,2 mg KOH/g, jeweils bezogen auf den 130°C-Festkörpergehalt, enthaltend 6-Hydroxycapronsäure, Hydroxyvaleriansäure, Laurinsäure und Polyethylenglykol (beispielsweise das handelsübliche Benetzungsadditiv auf Basis von Fettsäureestern Solsperse 39000 der Firma Th. Goldschmidt) gemischt und dispergiert.

### 5. Herstellung einer Wachsdispersion (W)

6,0 Gew.-Teile des Polyethylenwachses EVA 1 der BASF AG (handelsübliches Polyethylenwachs auf Basis eines Ethylen/Vinylacetat-Copolymeren mit einem Schmelzpunkt von 87-92 °C, einem Tropfpunkt nach Ubbelohde von ca. 95°C und einem massenmittleren Molekulargewicht von ca. 6500 g/mol) und 40,0 Gew.-Teile Xylol werden unter langsamem Rühren bei 100°C gelöst. Unter weiterem Rühren läßt man die Lösung auf 70°C abkühlen und gibt langsam 54,0 Gew.-Teile Butylacetat (technisch, ca. 85%ig) zu, wobei eine erwünschte Wachsfällung beginnt. Unter weiterem Rühren läßt man die Dispersion weiter bis auf 35°C abkühlen.

### 6. Herstellung einer Paste eines Aluminiumeffektpigmentes (A)

Die Paste wird aus 50,0 Gew.-Teilen einer handelsüblichen non-leafing Aluminiumeffektpigmentpaste vom Silberdollar-Typ mit einer mittleren Teilchengröße von 14 µm (Metallux 2192 der Firma Eckart) und 50,0 Gew.-Teilen des oben beschriebenen Acrylat-Bindemittels (AC) unter Rühren hergestellt.

### 7. Herstellung einer CAB-Lösung (C)

In einer Vorlage werden 76,0 Gew.-Teile Butylacetat mit 24,0 Gew.-Teile CAB 551-0.2 (handelsübliche Celluloseacetobutyrat der Firma Eastman) für 30 min gemischt.

### 8. Herstellung des Stammlackes ML-0 für die erfindungsgemäßen Metallic-Basislacke und Vergleichs-Metallic-Basislacke

Für die Herstellung der erfindungsgemäßen Metallic-Basislacke BC-2 bis BC-4 und BC-11 bis BC-13 und BC-18 bis BC-20, sowie der nicht erfindungsgemäßen Metallic-Basislacke BC-1, BC-5 bis BC-8, BC-9, BC-12 bis BC-16, BC-17 und BC-20 bis BC-24 wird zunächst ein Stammlack ML-0 durch Vermischen und Homogenisieren der folgenden Bestandteile hergestellt:
10,0 Gew.-Teile der unter 5. beschriebenen Wachsdispersion (W),
22,0 Gew.-Teile der unter 3. beschriebenen Polymermikroteilchen (M),
11,5 Gew.-Teile eines handelsüblichen, monomeren Hexamethoxy-methyl/butyl-Melaminharzes,
8,0 Gew.-Teile der unter 4. beschriebenen stabilisierten anorganischen Teilchen (N),
0,5 Gew.-Teile eines handelsüblichen, silikonfreien Benetzungsadditivs auf Basis eines aminharzmodifizierten Acrylcopolymers,
0,8 Gew.-Teile eines handelsüblichen, Hydroxyphenylbenztriazol-basierten UV-Absorbers,
16,0 Gew.-Teile des unter 1. beschriebenen Bindemittels (AC),
1,8 Gew.-Teile eines handelsüblichen, Amin-blockierten Dodecylbenzolsulfonsäure-(DDBSA-) Katalysators,
3,0 Gew.-Teile der unter 9. beschriebenen CAB-Lösung (C),
2,2 Gew.-Teile Butylacetat.

### 8.1. Herstellung eines Vergleichs-Metallic-Basislackes BC-1 (p/b = 0,13) ohne Polyester-Bindemittel

Für die Herstellung des nicht erfindungsgemäßen Metallic-Basislackes BC-1 wurden 75,8 Gew.-Teile des Stammlacks ML-0 aus dem Herstellbeispiel 8. mit 10,0 Gew.-Teilen der unter 6. beschriebenen Paste eines Aluminiumeffektpigments (A) versetzt und dazu 3,0 Gew.-Teile des unter 1. beschriebenen Acrylat-Bindemittels (AC) zugegeben und mit 11,2 Gew.-Teilen Butylacetat auf eine Spritzviskosität von 23 sec im Ford Cup 3-Auslaufbecher (23°C) eingestellt. Danach wies der nicht erfindungsgemäße Basislack BC-1 einen Festkörpergehalt von 40,2 Gew.-% auf (1 h/125°C).

### 8.2. Herstellung eines erfindungsgemäßen Metallic-Basislackes BC-2 (p/b = 0,13) mit Polyester-Bindemittel PE-1 (SZ > 20)

Für die Herstellung des erfindungsgemäßen Metallic-Basislackes BC-2 wurden 75,8 Gew.-Teile des Stammlacks ML-0 aus dem Herstellbeispiel 8. mit 10,0 Gew.-Teilen der unter 6. beschriebenen Paste eines Aluminiumeffektpigments (A) versetzt und dazu 3,0 Gew.-Teile des unter 2.1. beschriebenen Polyester-Bindemittels (PE-1) zugegeben und mit 11,2 Gew.-Teilen Butylacetat auf eine Spritzviskosität von 22 sec im Ford Cup 3-Auslaufbecher (23°C) eingestellt. Danach wies der erfindungsgemäße Basislack BC-2 einen Festkörpergehalt von 40,2 Gew.-% auf (1h/125°C).

### 8.3. Herstellung eines erfindungsgemäßen Metallic-Basislackes BC-3 (p/b = 0,13) mit Polyester-Bindemittel PE-2 (SZ > 20)

Für die Herstellung des erfindungsgemäßen Metallic-Basislackes BC-2 wurden 75,8 Gew.-Teile des Stammlacks ML-0 aus dem Herstellbeispiel 8. mit 10,0 Gew.-Teilen der unter 6. beschriebenen Paste eines Aluminiumeffektpigments (A) versetzt und dazu 3,1 Gew.-Teile des unter 2.2. beschriebenen Polyester-Bindemittels (PE-2) zugegeben und mit 11,1 Gew.-Teilen Butylacetat auf eine Spritzviskosität von 23 sec im Ford Cup 3-Auslaufbecher (23°C) eingestellt. Danach wies der erfindungsgemäße Basislack BC-3 einen Festkörpergehalt von 40,2 Gew.-% auf (1 h/125°C).

### 8.4. Herstellung eines erfindungsgemäßen Metallic-Basislackes BC-4 (p/b = 0,13) mit Polyester-Bindemittel PE-3 (SZ > 20)

Für die Herstellung des erfindungsgemäßen Metallic-Basislackes BC-4 wurden 75,8 Gew.-Teile des Stammlacks ML-0 aus dem Herstellbeispiel 8. mit 10,0 Gew.-Teilen der unter 6. beschriebenen Paste eines Aluminiumeffektpigments (A) versetzt und dazu 3,0 Gew.-Teile des unter 2.3. beschriebenen Polyester-Bindemittels (PE-3) zugegeben und mit 11,2 Gew.-Teilen Butylacetat auf eine Spritzviskosität von 23 sec im Ford Cup 3-Auslaufbecher (23°C) eingestellt. Danach wies der erfindungsgemäße Basislack BC-4 einen Festkörpergehalt von 40,2 Gew.-% auf (1 h/125°C).

### 8.5. Herstellung eines Vergleichs-Metallic-Basislackes BC-5 (p/b = 0,13) mit Polyester-Bindemittel PE-4 (SZ < 20)

Für die Herstellung des nicht erfindungsgemäßen Metallic-Basislackes BC-5 wurden 75,8 Gew.-Teile des Stammlacks ML-0 aus dem Herstellbeispiel 8. mit 10,0 Gew.-Teilen der unter 6. beschriebenen Paste eines Aluminiumeffektpigments (A) versetzt und dazu 3,7 Gew.- Teile des unter 2.4. beschriebenen Polyester-Bindemittels (PE-4) zugegeben und mit 10,5 Gew.-Teilen Butylacetat auf eine Spritzviskosität von 23 sec im Ford Cup 3-Auslaufbecher (23°C) eingestellt. Danach wies der nicht erfindungsgemäße Basislack BC-5 einen Festkörpergehalt von 40,2 Gew.-% auf (1 h/125°C).

### 8.6. Herstellung eines Vergleichs-Metallic-Basislackes BC-6 (p/b = 0,13) mit Polyester-Bindemittel PE-5 (SZ < 20)

Für die Herstellung des nicht erfindungsgemäßen Metallic-Basislackes BC-6 wurden 75,8 Gew.-Teile des Stammlacks ML-0 aus dem Herstellbeispiel 8. mit 10,0 Gew.-Teilen der unter 6. beschriebenen Paste eines Aluminiumeffektpigments (A) versetzt und dazu 3,7 Gew.- Teile des unter 2.5. beschriebenen Polyester-Bindemittels (PE-5) zugegeben und mit 10,8 Gew.-Teilen Butylacetat auf eine Spritzviskosität von 23 sec im Ford Cup 3-Auslaufbecher (23°C) eingestellt. Danach wies der nicht erfindungsgemäße Basislack BC-6 einen Festkörpergehalt von 40,2 Gew.-% auf (1 h/125°C).

### 8.7. Herstellung eines Vergleichs-Metallic-Basislackes BC-7 (p/b = 0,13) mit Polyester-Bindemittel PE-6 (SZ < 20)

Für die Herstellung des nicht erfindungsgemäßen Metallic-Basislackes BC-7 wurden 75,8 Gew.-Teile des Stammlacks ML-0 aus dem Herstellbeispiel 8. mit 10,0 Gew.-Teilen der unter 6. beschriebenen Paste eines Aluminiumeffektpigments (A) versetzt und dazu 3,5 Gew.- Teile des unter 2.6. beschriebenen Polyester-Bindemittels (PE-6) zugegeben und mit 11,6 Gew.-Teilen Butylacetat auf eine Spritzviskosität von 23 sec im Ford Cup 3-Auslaufbecher (23°C) eingestellt. Danach wies der nicht erfindungsgemäße Basislack BC-7 einen Festkörpergehalt von 40,2 Gew.-% auf (1 h/125°C).

### 8.8. Herstellung eines Vergleichs-Metallic-Basislackes BC-8 (p/b = 0,13) mit Polyester-Bindemittel PE-7 (SZ < 20)

Für die Herstellung des nicht erfindungsgemäßen Metallic-Basislackes BC-8 wurden 75,8 Gew.-Teile des Stammlacks ML-0 aus dem Herstellbeispiel 8. mit 10,0 Gew.-Teilen der unter 6. beschriebenen Paste eines Aluminiumeffektpigments (A) versetzt und dazu 2,6 Gew.- Teile des unter 2.7. beschriebenen Polyester-Bindemittels (PE-7) zugegeben und mit 11,7 Gew.-Teilen Butylacetat auf eine Spritzviskosität von 23 sec im Ford Cup 3-Auslaufbecher (23°C) eingestellt. Danach wies der nicht erfindungsgemäße Basislack BC-8 einen Festkörpergehalt von 40,2 Gew.-% auf (1 h/125°C).

### 8.9. Herstellung eines Vergleichs-Metallic-Basislackes BC-9 (p/b = 30 0,17) ohne Polyester-Bindemittel

Für die Herstellung des nicht erfindungsgemäßen Metallic-Basislackes BC-9 wurden 75,8 Gew.-Teile des Stammlacks ML-0 aus dem Herstellbeispiel 8. mit 14,0 Gew.-Teilen der unter 6. beschriebenen Paste eines Aluminiumeffektpigments (A) versetzt und dazu 3,0 Gew.- Teile des unter 1. beschriebenen Acrylat-Bindemittels (AC) zugegeben und mit 6,2 Gew.-Teilen Butylacetat auf eine Spritzviskosität von 23 sec im Ford Cup 3-Auslaufbecher (23°C) eingestellt. Danach wies der nicht erfindungsgemäße Basislack BC-9 einen Festkörpergehalt von 41,6 Gew.-% auf (1 h/125°C).

### 8.10. Herstellung eines erfindungsgemäßen Metallic-Basislackes BC-10 (p/b = 0,17) mit Polyester-Bindemittel PE-1 (SZ > 20)

Für die Herstellung des erfindungsgemäßen Metallic-Basislackes BC-10 wurden 75,8 Gew.-Teile des Stammlacks ML-0 aus dem Herstellbeispiel 8. mit 14,0 Gew.-Teilen der unter 6. beschriebenen Paste eines Aluminiumeffektpigments (A) versetzt und dazu 3,0 Gew.-Teile des unter 2.1. beschriebenen Polyester-Bindemittels (PE-1) zugegeben und mit 6,2 Gew.-Teilen Butylacetat auf eine Spritzviskosität von 23 sec im Ford Cup 3-Auslaufbecher (23°C) eingestellt. Danach wies der erfindungsgemäße Basislack BC-10 einen Festkörpergehalt von 41,6 Gew.-% auf (1h/125°C).

### 8.11. Herstellung eines erfindungsgemäßen Metallic-Basislackes BC-11 (p/b = 0,17) mit Polyester-Bindemittel PE-2 (SZ > 20)

Für die Herstellung des erfindungsgemäßen Metallic-Basislackes BC-11 wurden 75,8 Gew.-Teile des Stammlacks ML-0 aus dem Herstellbeispiel 8. mit 14,0 Gew.-Teilen der unter 6. beschriebenen Paste eines Aluminiumeffektpigments (A) versetzt und dazu 3,1 Gew.-Teile des unter 2.2. beschriebenen Polyester-Bindemittels (PE-2) zugegeben und mit 6,1 Gew.-Teilen Butylacetat auf eine Spritzviskosität von 23 sec im Ford Cup 3-Auslaufbecher (23°C) eingestellt. Danach wies der erfindungsgemäße Basislack BC-11 einen Festkörpergehalt von 41,6 Gew.-% auf (1 h/125°C).

### 8.12. Herstellung eines erfindungsgemäßen Metallic- Basislackes BC-12 (p/b = 0,17) mit Polyester-Bindemittel PE-3 (SZ >20)

Für die Herstellung des erfindungsgemäßen Metallic-Basislackes BC-12 wurden 75,8 Gew.-Teile des Stammlacks ML-0 aus dem Herstellbeispiel 8. mit 14,0 Gew.-Teilen der unter 6. beschriebenen Paste eines 10 Aluminiumeffektpigments (A) versetzt und dazu 3,0 Gew.-Teile des unter 2.3. beschriebenen Polyester-Bindemittels (PE-3) zugegeben und mit 6,2 Gew.-Teilen Butylacetat auf eine Spritzviskosität von 23 sec im Ford Cup 3-Auslaufbecher (23°C) eingestellt. Danach wies der erfindungsgemäße Basislack BC-12 einen Festkörpergehalt von 41,6 Gew.-% auf (1h/125°C).

### 8.13. Herstellung eines Vergleichs-Metallic-Basislackes BC-13 (p/b = 0,17) mit Polyester-Bindemittel PE-4 (SZ < 20)

Für die Herstellung des nicht erfindungsgemäßen Metallic-Basislackes BC-13 wurden 75,8 Gew.-Teile des Stammlacks ML-0 aus dem Herstellbeispiel 8. mit 14,0 Gew.-Teilen der unter 6. beschriebenen Paste eines Aluminiumeffektpigments (A) versetzt und dazu 3,7 Gew.-Teile des unter 2.4. beschriebenen Polyester-Bindemittels (PE-4) zugegeben und mit 5,5 Gew.-Teilen Butylacetat auf eine Spritzviskosität von 23 sec im Ford Cup 3-Auslaufbecher (23°C) eingestellt. Danach wies der nicht erfindungsgemäße Basislack BC-13 einen Festkörpergehalt von 41,6 Gew.-% auf (1 h/125°C).

### 8.14. Herstellung eines Vergleichs-Metallic-Basislackes BC-14 (p/b = 0,17) mit Polyester-Bindemittel PE-5 (SZ < 20)

Für die Herstellung des nicht erfindungsgemäßen Metallic-Basislackes BC-14 wurden 75,8 Gew.-Teile des Stammlacks ML-0 aus dem Herstellbeispiel 8. mit 14,0 Gew.-Teilen der unter 6. beschriebenen Paste eines Aluminiumeffektpigments (A) versetzt und dazu 3,7 Gew.-Teile des unter 2.5. beschriebenen Polyester-Bindemittels (PE-5) zugegeben und mit 5,7 Gew.-Teilen Butylacetat auf eine Spritzviskosität von 23 sec im Ford Cup 3-Auslaufbecher (23°C) eingestellt. Danach wies der nicht erfindungsgemäße Basislack BC-14 einen Festkörpergehalt von 41,6 Gew.-% auf (1 h/125°C).

### 8.15. Herstellung eines Vergleichs-Metallic-Basislackes BC-15 (p/b = 0,17) mit Polyester-Bindemittel PE-6 (SZ < 20)

Für die Herstellung des nicht erfindungsgemäßen Metallic-Basislackes BC-15 wurden 75,8 Gew.-Teile des Stammlacks ML-0 aus dem Herstellbeispiel 8. mit 14,0 Gew.-Teilen der unter 6. beschriebenen Paste eines Aluminiumeffektpigments (A) versetzt und dazu 3,5 Gew.-Teile des unter 2.6. beschriebenen Polyester-Bindemittels (PE-6) zugegeben und mit 6,6 Gew.-Teilen Butylacetat auf eine Spritzviskosität von 23 sec im Ford Cup 3-Auslaufbecher (23°C) eingestellt. Danach wies der nicht erfindungsgemäße Basislack BC-15 einen Festkörpergehalt von 41,6 Gew.-% auf (1 h/125°C).

### 8.16. Herstellung eines Vergleichs-Metallic-Basislackes BC-16 (p/b = 0,17) mit Polyester-Bindemittel PE-7 (SZ < 20)

Für die Herstellung des nicht erfindungsgemäßen Metallic-Basislackes BC-16 wurden 75,8 Gew.-Teile des Stammlacks ML-0 aus dem Herstellbeispiel 8. mit 14,0 Gew.-Teilen der unter 6. beschriebenen Paste eines Aluminiumeffektpigments (A) versetzt und dazu 2,6 Gew.-Teile des unter 2.7. beschriebenen Polyester-Bindemittels (PE-7) zugegeben und mit 6,7 Gew.-Teilen Butylacetat auf eine Spritzviskosität von 23 sec im Ford Cup 3-Auslaufbecher (23°C) eingestellt. Danach wies der nicht erfindungsgemäße Basislack BC-16 einen Festkörpergehalt von 41,6 Gew.% auf (1 h/125°C).

### 8.17. Herstellung eines Vergleichs-Metallic-Basislackes BC-17 (p/b = 0,21) ohne Polyester-Bindemittel

Für die Herstellung des nicht erfindungsgemäßen Metallic-Basislackes BC-17 wurden 75,8 Gew.-Teile des Stammlacks ML-0 aus dem Herstellbeispiel 8. mit 18,0 Gew.-Teilen der unter 6. beschriebenen Paste eines Aluminiumeffektpigments (A) versetzt und dazu 3,0 Gew.- Teile des unter 1 beschriebenen Acrylat-Bindemittels (AC) zugegeben und mit 1,2 Gew.-Teilen Butylacetat auf eine Spritzviskosität von 23 sec im Ford Cup 3-Auslaufbecher (23°C) eingestellt. Danach wies der nicht erfindungsgemäße Basislack BC-17 einen Festkörpergehalt von 43,0 Gew.-% auf (1h/125°C).

### 8.18. Herstellung eines erfindungsgemäßen Metallic-Basislackes BC-18 (p/b = 0,21) mit Polyester-Bindemittel PE-1 (SZ > 20)

Für die Herstellung des erfindungsgemäßen Metallic-Basislackes BC-18 wurden 75,8 Gew.-Teile des Stammlacks ML-0 aus dem Herstellbeispiel 8. mit 18,0 Gew.-Teilen der unter 6. beschriebenen Paste eines Aluminiumeffektpigments (A) versetzt und dazu 3,0 Gew.-Teile des unter 2.1. beschriebenen Polyester-Bindemittels (PE-1) zugegeben und mit 1,2 Gew.-Teilen Butylacetat auf eine Spritzviskosität von 22 sec im Ford Cup 3-Auslaufbecher (23°C) eingestellt. Danach wies der erfindungsgemäße Basislack BC-18 einen Festkörpergehalt von 43,0 Gew.-% auf (1h/125°C).

### 8.19. Herstellung eines erfindungsgemäßen Metallic-Basislackes BC-19 (p/b = 0,21) mit Polyester-Bindemittel PE-2 (SZ > 20)

Für die Herstellung des erfindungsgemäßen Metallic-Basislackes BC-19 wurden 75,8 Gew.-Teile des Stammlacks ML-0 aus dem Herstellbeispiel 8. mit 18,0 Gew.-Teilen der unter 6. beschriebenen Paste eines Aluminiumeffektpigments (A) versetzt und dazu 3,1 Gew.-Teile des unter 2.2. beschriebenen Polyester-Bindemittels (PE-2) zugegeben und mit 1,1 Gew.-Teilen Butylacetat auf eine Spritzviskosität von 23 sec im Ford Cup 3-Auslaufbecher (23°C) eingestellt. Danach wies der erfindungsgemäße Basislack BC-19 einen Festkörpergehalt von 43,0 Gew.-% auf (1 h/125°C).

### 8.20. Herstellung eines erfindungsgemäßen Metallic- Basislackes BC-20 (p/b = 0,21) mit Polyester-Bindemittel PE-3 (SZ > 20)

Für die Herstellung des erfindungsgemäßen Metallic-Basislackes BC-20 wurden 75,8 Gew.-Teile des Stammlacks ML-0 aus dem Herstellbeispiel 8. mit 18,0 Gew.-Teilen der unter 6. beschriebenen Paste eines Aluminiumeffektpigments (A) versetzt und dazu 3,0 Gew.-Teile des unter 2.3. beschriebenen Polyester-Bindemittels (PE-3) zugegeben und mit 1,2 Gew.-Teilen Butylacetat auf eine Spritzviskosität von 23 sec im Ford Cup 3-Auslaufbecher (23°C) eingestellt. Danach wies der erfindungsgemäße Basislack BC-20 einen Festkörpergehalt von 43,0 Gew.-% auf (1 h/125°C).

### 8.21. Herstellung eines Vergleichs-Metallic-Basislackes BC-21 (p/b = 0,21) mit Polyester-Bindemittel PE-4 (SZ < 20)

Für die Herstellung des nicht erfindungsgemäßen Metallic-Basislackes BC-21 wurden 75,8 Gew.-Teile des Stammlacks ML-0 aus dem Herstellbeispiel 8. mit 18,0 Gew.-Teilen der unter 6. beschriebenen Paste eines Aluminiumeffektpigments (A) versetzt und dazu 3,7 Gew.- Teile des unter 2.4. beschriebenen Polyester-Bindemittels (PE-4) zugegeben und mit 0,5 Gew.-Teilen Butylacetat auf eine Spritzviskosität von 23 sec im Ford Cup 3-Auslaufbecher (23°C) eingestellt. Danach wies der nicht erfindungsgemäße Basislack BC-21 einen Festkörpergehalt von 43,0 Gew.-% auf (1h/125°C).

### 8.22. Herstellung eines Vergleichs-Metallic-Basislackes BC-22 (p/b = 0,21) mit Polyester-Bindemittel PE-5 (SZ < 20)

Für die Herstellung des nicht erfindungsgemäßen Metallic-Basislackes BC-22 wurden 75,8 Gew.-Teile des Stammlacks ML-0 aus dem Herstellbeispiel 8. mit 18,0 Gew.-Teilen der unter 6. beschriebenen Paste eines Aluminiumeffektpigments (A) versetzt und dazu 3,7 Gew.-Teile des unter 2.5. beschriebenen Polyester-Bindemittels (PE-5) zugegeben und mit 0,7 Gew.-Teilen Butylacetat auf eine Spritzviskosität von 23 sec im Ford Cup 3-Auslaufbecher (23°C) eingestellt. Danach wies der nicht erfindungsgemäße Basislack BC-22 einen Festkörpergehalt von 43,0 Gew.-% auf (1 h/125°C).

### 8.23. Herstellung eines Vergleichs-Metallic-Basislackes BC-23 25 (p/b = 0,21) mit Polyester-Bindemittel PE-6 (SZ < 20)

Für die Herstellung des nicht erfindungsgemäßen Metallic-Basislackes BC-23 wurden 75,8 Gew.-Teile des Stammlacks ML-0 aus dem Herstellbeispiel 8. mit 18,0 Gew.-Teilen der unter 6. beschriebenen Paste eines Aluminiumeffektpigments (A) versetzt und dazu 3,5 Gew.-Teile des unter 2.6. beschriebenen Polyester-Bindemittels (PE-6) zugegeben und mit 1,6 Gew.-Teilen Butylacetat auf eine Spritzviskosität von 23 sec im Ford Cup 3-Auslaufbecher (23°C) eingestellt. Danach wies der nicht erfindungsgemäße Basislack BC-23 einen Festkörpergehalt von 43,0 Gew.-% auf (1 h/125°C).

### 8.24. Herstellung eines Vergleichs-Metallic-Basislackes BC-24 (p/b = 0,21) mit Polyester-Bindemittel PE-7 (SZ < 20)

Für die Herstellung des nicht erfindungsgemäßen Metallic-Basislackes BC-24 wurden 75,8 Gew.-Teile des Stammlacks ML-0 aus dem Herstellbeispiel 8. mit 18,0 Gew.-Teilen der unter 6. beschriebenen Paste eines Aluminiumeffektpigments (A) versetzt und dazu 2,6 Gew.-Teile des unter 2.7. beschriebenen Polyester-Bindemittels (PE-7) zugegeben und mit 1,7 Gew.-Teilen Butylacetat auf eine Spritzviskosität von 23 sec im Ford Cup 3-Auslaufbecher (23°C) eingestellt. Danach wies der nicht erfindungsgemäße Basislack BC-24 einen Festkörpergehalt von 43,0 Gew.-% auf (1 h/125°C).

### 9. Bestimmung des ESTA-Deckvermögens der Metallic-Basislacke BC1 bis BC24

Die Metallic-Basislacke BC-1 bis BC-24 wurden auf Coil-beschichteten Prüftafeln der Abmessungen 30 x 60 cm durch ESTA-Doppellackierung im Keil über einen Schichtdickenbereich zwischen 1 µm und 25 µm aufgetragen. Anschließend wurden die Basislackschichten während 5 min abgelüftet. Danach wurden die Basislackschichten während 10 min bei 140°C Objekttemperatur eingebrannt und das Deckvermögen (DV) mittels eines S/W-Monitors visuell bestimmt.

Die Metallic-Basislacke BC-1 bis BC-8 mit einem p/b-Verhältnis von 0,15 ergaben ein Deckvermögen von 17-19 µm, die Metallic-Basislacke BC-9 bis BC-16 mit einem p/b-Verhältnis von 0,18 ergaben ein Deckvermögen von 14-16 µm und die Metallic-Basislacke BC-17 bis BC-24 mit einem p/b-Verhältnis von 0,21 ergaben ein Deckvermögen von 11-13 µm.

Die Einzelergebnisse sind in Tabelle 1 zusammengefasst:

**Tabelle 1: ESTA-Deckvermögen der Metallic-Basislacke BC-1 bis BC-24.**

| **p/b = 0,13** | **Esta DV** | **p/b = 0,17** | **Esta DV** | **p/b = 0,21** | **Esta DV** |
|---|---|---|---|---|---|
| BC-1 | 18 µm | BC-9 | 15 µm | BC-17 | 12 µm |
| BC-2 | 17 µm | BC-10 | 14 µm | BC-18 | 11 µm |
| BC-3 | 18 µm | BC-11 | 16 µm | BC-19 | 12 µm |
| BC-4 | 19 µm | BC-12 | 15 µm | BC-20 | 13 µm |
| BC-5 | 18 µm | BC-13 | 14 µm | BC-21 | 12 µm |
| BC-6 | 17 µm | BC-14 | 15 µm | BC-22 | 11 µm |
| BC-7 | 18 µm | BC-15 | 16 µm | BC-23 | 11 µm |
| BC-8 | 19 µm | BC-16 | 14 µm | BC-24 | 13 µm |

### 10. Herstellung der Mehrschichtlackierungen O-1 bis O-24 im Original-Aufbau und R-1 bis R-24 im Reparatur-Aufbau

Für die Prüfung der technologischen Eigenschaften der Original-Lackierungen der Beispiellacke BC-1 bis BC-24 wurden in üblicher und bekannter Weise Prüftafeln der Abmessungen 10 x 20 cm hergestellt. Hierzu wurden KTL-beschichtete Tafeln, mit einem handelsüblichen konventionellen, grauen Füller auf Polyester-Basis der Firma BASF Coatings AG beschichtet, wonach die resultierenden Füllerschichten für 5 min bei 20°C und einer relativen Luftfeuchtigkeit von 65% abgelüftet und in einem Umluftofen für 5 min bei 165°C Objekttemperatur eingebrannt wurden.

Nach dem Abkühlen der Prüftafeln auf 20 °C wurden in einer ersten Serie die Basislacke BC-1 bis BC-24 durch ESTA-Spritzautomatenapplikation mit einer Trockenfilmschichtdicke von 11-19 µm entsprechend dem jeweiligem Deckvermögen aufgetragen. Anschließend wurden die Basislackschichten während 5 Minuten abgelüftet und mit einem handelsüblichen High-Solid 1K Klarlack der Firma BASF Coatings AG mit einer Trockenfilmschichtdicke von 40-50 µm überschichtet. Hiernach wurden die Basislackschichten und die Klarlackschichten für 10 Minuten bei 140°C Objekttemperatur eingebrannt. Es resultierten die Original-Lackierungen O-1 bis O-24.

Für die Prüfung der technologischen Eigenschaften der Reparatur-Lackierungen der Beispiellacke BC-1 bis BC-24 wurde eine Serie der oben beschriebenen Original-Lackierungen O-1 bis O-24 nochmals mittels ESTA-Spritzautomatenapplikation mit den Beispiellacken BC-1 bis BC-24 mit einer Trockenfilmschichtdicke von 11-19 µm entsprechend dem jeweiligem Deckvermögen aufgetragen. Anschließend wurden die Basislackschichten während 5 Minuten abgelüftet und mit einem handelsüblichen High-Solid-1K-Klarlack der Firma BASF Coatings AG mit einer Trockenfilmschichtdicke von 40-50 µm überschichtet. Hiernach wurden die Basislackschichten und die Klarlackschichten für 10 Minuten bei 140 °C Objekttemperatur eingebrannt. Es resultierten die Reparatur-Lackierungen R-1 bis R-24.

In Tabelle 2 sind die Mehrschichtaufbauten der Original- und Reparatur-Lackierungen der Vergleichslackierungen 1, 5-9, 13-17 und 21-24 sowie der erfindungsgemäßen Lackierungen 2-4, 10-12 und 18-20 zusammengefasst.

**Tabelle 2: Mehrschichtlackierungen O-1 bis O-24 im Original-Aufbau und R-1 bis R-24 im Reparatur-Aufbau.**

| Mehrschichtlacklerung | Metallic-Basislack | p/b | Schichtdicke Basislack |
|---|---|---|---|
| O-1 bzw. R-1 | BC-1 | 0,13 | 17-19 µm |
| O-2bzw. R-2 | BC-2 | 0,13 | 17-19 µm |
| O-3 bzw. R-3 | BC-3 | 0,13 | 17-19 µm |
| O-4 bzw. R-4 | BC-4 | 0,13 | 17-19 µm |
| O-5 bzw. R-5 | BC-5 | 0,13 | 17-19 µm |
| O-6 bzw. R-6 | BC-6 | 0,13 | 17-19 µm |
| O-7 bzw. R-7 | BC-7 | 0,13 | 17-19 µm |
| O-8 bzw. R-8 | BC-8 | 0,13 | 17-19 µm |
| O-9 bzw. R-9 | BC-9 | 0,17 | 14-16 µm |
| O-10 bzw. R-10 | BC-10 | 0,17 | 14-16 µm |
| O-11 bzw. R-11 | BC-11 | 0,17 | 14-16 µm |
| O-12 bzw. R-12 | BC-12 | 0,17 | 14-16 µm |
| O-13 bzw. R-13 | BC-13 | 0,17 | 14-16 µm |
| O-14 bzw. R-14 | BC-14 | 0,17 | 14-16 µm |
| O-15 bzw. R-15 | BC-15 | 0,17 | 14-16 µm |
| O-16 bzw. R-16 | BC-16 | 0,17 | 14-16 µm |
| O-17 bzw. R-17 | BC-17 | 0,21 | 11-13 µm |
| O-18 bzw. R-18 | BC-18 | 0,21 | 11-13 µm |
| O-19 bzw. R-19 | BC-19 | 0,21 | 11-13 µm |
| O-20 bzw. R-20 | BC-20 | 0,21 | 11-13 µm |
| O-21 bzw. R-21 | BC-21 | 0,21 | 11-13 µm |
| O-22 bzw. R-22 | BC-22 | 0,21 | 11-13 µm |
| O-23 bzw. R-23 | BC-23 | 0,21 | 11-13 µm |
| O-24 bzw. R-24 | BC-24 | 0,21 | 11-13 µm |

### 11. Prüfung der erhaltenen Mehrschichtlackierungen

Die Zwischenschichthaftung der nach dem in Abschnitt 10. angegebenen Verfahren hergestellten Mehrschichtlackierungen wurde mit dem Gitterschnitttest nach Ford Testmethode BI 106-01 geprüft. Die Bewertungsskala für die Gitterschnittprüfung nach Ford Testmethode BI 106-01 umfasst einen Bereich von 0-10, wobei eine Bewertung > 2 auf ein potentielles Haftungsproblem hinweist.

Die Steinschlagfestigkeit der Mehrschichtlackierungen wurde gemäß Ford Testmethode BI 157-06 geprüft. Die Bewertungsskala für die Steinschlagprüfung nach Ford Testmethode BI 157-06 umfasst einen Bereich von 1-10, wobei eine Bewertung < 4 auf eine mangelhafte Steinschlagfestigkeit hinweist.

In Tabelle 3 sind die Einzelergebnisse zusammengefasst.

**Tabelle 3: Ergebnisse der Gitterschnitt- und Steinschlagprüfungen der Mehrschichtlackierungen O-1 bis O-24 im Original-Aufbau und R-1 bis R-24 im Reparatur-Aufbau.**

| Mehrschichtlackierung | Metallic-Basislack | p/b | Schichtdicke Basis- | Gitterschnitt | | Steinschlag | |
|---|---|---|---|---|---|---|---|
| | | | | Orig. | Rep. | Orig. | Rep. |
| O-1 bzw. R-1 | BC-1 | 0,13 | 17-19 µm | 1 | 1 | 6 | 4 |
| O-2 bzw. R-2 | BC-2 | 0,13 | 17-19 µm | 0 | 0 | 8 | 7 |
| O-3 bzw. R-3 | BC-3 | 0,13 | 17-19 µm | 0 | 0 | 7 | 6 |
| O-4 bzw. R-4 | BC-4 | 0,13 | 17-19 µm | 0 | 0 | 8 | 7 |
| O-5 bzw. R-5 | BC-5 | 0,13 | 17-19 µm | 1 | 1 | 6 | 5 |
| O-6 bzw. R-6 | BC-6 | 0,13 | 17-19 µm | 0 | 1 | 6 | 5 |
| O-7 bzw. R-7 | BC-7 | 0,13 | 17-19 µm | 1 | 1 | 6 | 5 |
| O-8 bzw. R-8 | BC-8 | 0,13 | 17-19 µm | 1 | 1 | 6 | 5 |
| O-9 bzw. R-9 | BC-9 | 0,17 | 14-16 µm | 1 | 1-2 | 4 | 2-3 |
| O-10 bzw. R-10 | BC-10 | 0,17 | 14-16 µm | 0 | 0 | 6 | 5 |
| O-11 bzw. R-11 | BC-11 | 0,17 | 14-16 µm | 0 | 0 | 5-6 | 4-5 |
| O-12 bzw, R-12 | BC-12 | 0,17 | 14-16 µm | 0 | 0 | 5 | 4-5 |
| O-13 bzw. R-13 | BC-13 | 0,17 | 14-16 µm | 1 | 1-2 | 4-5 | 3 |
| O-14 bzw. R-14 | BC-14 | 0,17 | 14-16 µm | 1 | 1-2 | 4 | 3 |
| O-15 bzw. R-15 | BC-15 | 0,17 | 14-16 µm | 1 | 1-2 | 4-5 | 3 |
| O-16 bzw. R-16 | BC-16 | 0,17 | 14-16 µm | 1 | 1-2 | 4 | 2-3 |
| O-17 bzw. R-17 | BC-17 | 0,21 | 11-13 µm | 1 | 2 | 2 | 1 |
| O-18 bzw. R-18 | BC-18 | 0,21 | 11-13 µm | 1 | 2 | 5 | 4 |
| O-19 bzw. R-19 | BC-19 | 0,21 | 11-13 µm | 1 | 2 | 5 | 4 |
| O-20 bzw. R-20 | BC-20 | 0,21 | 11-13 µm | 1 | 2 | 5 | 4 |
| O-21 bzw. R-21 | BC-21 | 0,21 | 11-13 µm | 2 | 2 | 2 | 1-2 |
| O-22 bzw. R-22 | BC-22 | 0,21 | 11-13 µm | 1 | 2 | 2-3 | 2 |
| O-23 bzw. R-23 | BC-23 | 0,21 | 11-13 µm | 1 | 2 | 2 | 2 |
| O-24 bzw. R-24 | BC-24 | 0,21 | 11-13 µm | 1 | 2 | 2-3 | 2 |

Durch die Reduktion der Basislackschichtdicke von 17-19 µm auf 11-13 µm kann eine Reduktion der VOC-Emissionen im Lackierprozess erfolgen. Damit andere Eigenschaften, wie Prozessstabilität, Farbtonstabilität und Untergrundabdeckung nicht schlechter werden, ist es notwendig, die Pigmentierung der Beschichtungsmittel anzuheben. Ein Maß dafür ist das sogenannte Pigment-Bindemittel-Verhältnis (p/b). Je höher das p/b, desto höher ist der Pigmentgehalt in der Basislackformulierung. Eine erhöhte Pigmentierung und verminderte Schichtdicke führte bei den konventionellen, nicht erfindungsgemäßen Lackierungen zu einer deutlichen Verschlechterung der Haftung sowie insbesondere der Steinschlagfestigkeit.

Die erfindungsgemäßen Mehrschichtlackierungen im Original-Aufbau O-2/3/4/10/11/12/18/19/20 sowie im Reparatur-Aufbau R-2/3/4/10/11/12/18/19/20, hergestellt aus den erfindungsgemäßen Metallic-Basislacken BC-2, BC-2 und BC-4, welche die Polyester-Bindemittel PE-1, PE-2 und PE-3 enthalten, die eine Säurezahl SZ von > 20 mg KOH/g jeweils bezogen auf den jeweiligen ermittelten Festkörper aufweisen, erfüllen sowohl im Original- als auch im Reparatur-Aufbau den Gitterschnitttest nach Ford Testmethode BI 106-01 sowie den Steinschlagtest gemäß Ford Testmethode BI 157-06. Insbesondere weisen die erfindungsgemäßen Mehrschichtlackierungen auch bei einer geringen Schichtdicke neben einem guten Deckvermögen auch eine gute Haftung sowie eine gute Steinschlagfestigkeit auf.

Haftung und Steinschlagfestigkeit der erfindungsgemäßen Lackierungen sind deutlich besser als die Haftung und Steinschlagfestigkeit der nicht erfindungsgemäßen Lackierungen.

Die nicht erfindungsgemäßen Mehrschichtlackierungen O-9/R-9, sowie O-13 bis O-17 und R-13 bis R-17 mit einem p/b von 0,13 und einem Deckvermögen zwischen 14 und 16 µm, sowie insbesondere die nicht erfindungsgemäßen Mehrschichtlackierungen O-17/R-17, sowie O-21 bis O-24 und R-21 bis R-24 mit einem p/b von 0,16 und einem Deckvermögen zwischen 11 und 13 µm, erfüllen die Anforderungen der Haftungsprüfungen nach Ford-Spezifikation nicht. Die nicht erfindungsgemäßen Mehrschichtlackierungen, deren Basislack entweder kein Polyester-Bindemittel oder ein Polyester-Bindemittel mit einer Säurezahl von < 20 mg KOH/g enthält, zeigen eine schlechtere Haftung und insbesondere eine schlechtere Steinschlagfestigkeit als die erfindungsgemäßen Lackierungen.

## Patentansprüche

1. Wasserfreier High-Solid-Basislack mit einem Festkörpergehalt von mindestens 35 Gew.-%, enthaltend
(a) 1 bis 10 Gew.-% mindestens eines Polyester-Bindemittels, welches eine Säurezahl von mindestens 20 mg KOH/g aufweist,
(b) 10 bis 30 Gew.-% mindestens eines Acrylat-Bindemittels,
(c) 9,5 bis 30 Gew.-% mindestens eines Vernetzungsmittels, das ausgewählt ist aus der Gruppe bestehend aus freien Isocyanaten, blockierten Isocyanaten und Aminoplastharzen,
(d) 1 bis 3 Gew.-% mindestens eines Sulfonsäure-Katalysators,
(e) 1 bis 35 Gew.-% mindestens eines Pigments,
(f) 30 bis 65 Gew.-% mindestens eines organischen Lösemittels und
(g) 0,5 bis 47 Gew.-% mindestens eines Hilfs- oder Zusatzstoffs,
jeweils bezogen auf das Gesamtgewicht des Basislacks, wobei der Festkörpergehalt des wasserfreien High-Solid-Basislacks nach DIN ISO 3251 mit einer Einwaage von 1,0 g bei einer Prüfdauer von 60 min bei einer Temperatur von 125° C bestimmt wird und die Säurezahl nach DIN 53402 bestimmt wird.

2. Basislack nach Anspruch 1, **dadurch gekennzeichnet, dass** der Festkörpergehalt des Basislacks mindestens 40 Gew.-% beträgt.

3. Basislack nach Anspruch 1 oder 2, **dadurch gekennzeichnet, dass** der Sulfonsäure-Katalysator (d) ein blockierter Sulfonsäure-Katalysator ist.

4. Basislack nach einem der Ansprüche 1 bis 3, **dadurch gekennzeichnet, dass** er 2 bis 8 Gew.-%, bezogen auf das Gesamtgewicht des Basislacks, des mindestens einen Polyester-Bindemittels enthält.

5. Basislack nach einem der Ansprüche 1 bis 4, **dadurch gekennzeichnet, dass** das Polyester-Bindemittel Struktureinheiten enthält, die auf aliphatische, cycloaliphatische und/oder aromatische Di- bzw. Polycarbonsäuren und auf Di- bzw. Polyole zurückgehen.

6. Basislack nach einem der Ansprüche 1 bis 5, **dadurch gekennzeichnet, dass** das Polyester-Bindemittel ein gewichtsmittleres Molekulargewicht von 400 bis 6000 g/mol aufweist.

7. Verfahren zur Herstellung eines wasserfreien High-Solid-Basislacks nach einem der vorherigen Ansprüche, **dadurch gekennzeichnet, dass** die Bestandteile miteinander vermischt und homogenisiert werden.

8. Verwendung eines wasserfreien High-Solid-Basislacks nach einem der Ansprüche 1 bis 7 zur Herstellung einer Mehrschichtlackierung.

9. Mehrschichtlackierung, enthaltend mindestens eine Basislackierung aus einem Basislack nach einem der Ansprüche 1 bis 7 und mindestens eine Klarlackierung.

10. Mehrschichtlackierung nach Anspruch 9, **dadurch gekennzeichnet, dass** die Trockenfilmschichtdicke der Basislackierung 10 - 20 µm beträgt.

11. Mehrschichtlackierung nach einem der Ansprüche 9 oder 10, **dadurch gekennzeichnet, dass** sie genau eine Basislackierung und genau eine Klarlackierung enthält.

12. Verfahren zur Herstellung einer Mehrschichtlackierung nach einem der Ansprüche 9 bis 11, **dadurch gekennzeichnet, dass** in der Reihenfolge
a. zunächst mindestens ein Basislack nach einem der Ansprüche 1 bis 6, und anschließend
b. mindestens ein Klarlack
auf ein gegebenenfalls vorbeschichtetes Substrat appliziert werden.

13. Verfahren nach Anspruch 12, **dadurch gekennzeichnet, dass** der Klarlack einen Festkörperanteil von mindestens 40 Gew.-% aufweist.

14. Metallische oder Kunststoff-Substrate, beschichtet mit mindestens einem High Solid-Basislack nach einem der Ansprüche 1 bis 6.

15. Metallische oder Kunststoff-Substrate nach Anspruch 14, **dadurch gekennzeichnet, dass** sie mit einer Mehrschichtlackierung nach einem der Ansprüche 9 bis 11 beschichtet sind.

## Claims

1. Waterless high-solids basecoat material having a solids content of at least 35% by weight, containing
(a) 1% to 10% by weight of at least one polyester binder which has an acid number of at least 20 mg KOH/g,
(b) 10% to 30% by weight of at least one acrylate binder,
(c) 9.5% to 30% by weight of at least one crosslinking agent which is selected from the group of free isocyanates, blocked isocyanates, and amino resins,
(d) 1% to 3% by weight of at least one sulfonic acid catalyst,
(e) 1 % to 35% by weight of at least one pigment,
(f) 30% to 65% by weight of at least one organic solvent, and
(g) 0.5% to 47% by weight of at least one auxiliary or additive,
based in each case on the total weight of the basecoat material, the solids content of the waterless high-solids basecoat material being determined in accordance with DIN ISO 3251 with an initial mass of 1.0 g for a test period of 60 minutes at a temperature of 125°C and the acid number being determined in accordance with DIN 53402.

2. Basecoat material according to Claim 1, **characterized in that** the solids content of the basecoat material is at least 40% by weight.

3. Basecoat material according to Claim 1 or 2, **characterized in that** the sulfonic acid catalyst (d) is a blocked sulfonic acid catalyst.

4. Basecoat material according to any of Claims 1 to 3, **characterized in that** it contains 2% to 8% by weight, based on the total weight of the basecoat material, of said at least one polyester binder.

5. Basecoat material according to any of Claims 1 to 4, **characterized in that** the polyester binder comprises structural units which originate from aliphatic, cycloaliphatic and/or aromatic dicarboxylic and/or polycarboxylic acids and from diols and/or polyols.

6. Basecoat material according to any of Claims 1 to 5, **characterized in that** the polyester binder has a weight-average molecular weight of 400 to 6000 g/mol.

7. Process for preparing a waterless high-solids basecoat material according to any of the preceding claims, **characterized in that** the constituents are mixed with one another and the mixture is homogenized.

8. Use of a waterless high-solids basecoat material according to any of Claims 1 to 7 to produce a multicoat paint system.

9. Multicoat paint system comprising at least one basecoat of a basecoat material according to any of Claims 1 to 7 and at least one clearcoat.

10. Multicoat paint system according to Claim 9, **characterized in that** the dry film thickness of the basecoat is 10 - 20 µm.

11. Multicoat paint system according to either of Claims 9 and 10, **characterized in that** it comprises precisely one basecoat and precisely one clearcoat.

12. Process for producing a multicoat paint system according to any of Claims 9 to 11, **characterized in that**, in this order -
a. first at least one basecoat material according to any of Claims 1 to 6,
and subsequently
b. at least one clearcoat material -
are applied to an optionally precoated substrate.

13. Process according to Claim 12, **characterized in that** the clearcoat material has a solids fraction of at least 40% by weight.

14. Metallic or plastics substrates coated with at least one high-solids basecoat material according to any of Claims 1 to 6.

15. Metallic or plastics substrates according to Claim 14, **characterized in that** they are coated with a multicoat paint system according to any of Claims 9 to 11.

## Revendications

1. Peinture de fond High-Solid sans eau, ayant une teneur en matière solide d'au moins 35 % en poids, contenant
(a) 1 à 10 % en poids d'au moins un liant polyester, qui présente un indice d'acide d'au moins 20 mg de KOH/g,
(b) 10 à 30 % en poids d'au moins un liant acrylate,
(c) 9,5 à 30 % en poids d'au moins un agent de réticulation qui est choisi dans le groupe constitué par des isocyanates libres, des isocyanates bloqués et des résines aminoplaste,
(d) 1 à 3 % en poids d'au moins un catalyseur de type acide sulfonique,
(e) 1 à 35 % en poids d'au moins un pigment,
(f) 30 à 65 % en poids d'au moins un solvant organique et
(g) 0,5 à 47 % en poids d'au moins un adjuvant ou additif,
chaque fois par rapport au poids total de la peinture de fond, la teneur en matière solide de la peinture de fond High-Solid sans eau étant déterminée selon DIN ISO 3251 avec une pesée de 1,0 g pour une durée d'essai de 60 min à une température de 125 °C et l'indice d'acide étant déterminé selon DIN 53402.

2. Peinture de fond selon la revendication 1, **caractérisée en ce que** la teneur en matière solide de la peinture de fond est d'au moins 40 % en poids.

3. Peinture de fond selon la revendication 1 ou 2, **caractérisée en ce que** le catalyseur de type acide sulfonique (d) est un catalyseur de type acide sulfonique bloqué.

4. Peinture de fond selon l'une quelconque des revendications 1 à 3, **caractérisée en ce qu'**elle contient 2 à 8 % en poids, par rapport au poids total de la peinture de fond, dudit au moins un liant polyester.

5. Peinture de fond selon l'une quelconque des revendications 1 à 4, **caractérisée en ce que** le liant polyester contient des motifs structuraux qui dérivent d'acides di- ou polycarboxyliques aliphatiques, cycloaliphatiques et/ou aromatiques et de diols ou polyols.

6. Peinture de fond selon l'une quelconque des revendications 1 à 5, **caractérisée en ce que** le liant polyester présente une masse moléculaire moyenne en poids de 400 à 6 000 g/mole.

7. Procédé pour la préparation d'une peinture de fond High-Solid sans eau selon l'une quelconque des revendications précédentes, **caractérisé en ce qu'**on mélange entre eux et homogénéise les composants.

8. Utilisation d'une peinture de fond High-Solid sans eau selon l'une quelconque des revendications 1 à 7, pour la production d'un revêtement de peinture multicouche.

9. Revêtement de peinture multicouche, contenant au moins un revêtement de peinture de fond à base d'une peinture de fond selon l'une quelconque des revendications 1 à 7 et au moins un revêtement de vernis.

10. Revêtement de peinture multicouche selon la revendication 9, **caractérisé en ce que** l'épaisseur de couche de feuil sec du revêtement de peinture de fond vaut 10 - 20 µm.

11. Revêtement de peinture multicouche selon la revendication 9 ou 10, **caractérisé en ce qu'**il contient exactement un revêtement de peinture de fond et exactement un revêtement de vernis.

12. Procédé pour la production d'un revêtement de peinture multicouche selon l'une quelconque des revendications 9 à 11, **caractérisé en ce qu'**on applique dans l'ordre
a. d'abord au moins une peinture de fond selon l'une quelconque des revendications 1 à 6, et ensuite
b. au moins un vernis
sur un subjectile éventuellement pré-enduit.

13. Procédé selon la revendication 12, **caractérisé en ce que** le vernis présente une teneur en matière solide d'au moins 40 % en poids.

14. Subjectiles métalliques ou en matière plastique, enduits avec au moins une peinture de fond High-Solid selon l'une quelconque des revendications 1 à 6.

15. Subjectiles métalliques ou en matière plastique selon la revendication 14, **caractérisés en ce qu'**ils sont revêtus avec un revêtement de peinture multicouche selon l'une quelconque des revendications 9 à 11.
